# EUROPEAN PATENT APPLICATION

(11) **EP 4 307 511 A1**
(43) Date of publication of application: **17.01.2024**
(21) Application number: 23185861.4
(22) Date of filing: 17.07.2023
(51) Int. Cl.: H02J 3/14, H02J 3/00, F24F 11/37, H02J 3/32, H02J 3/38

(54) **SYSTEMS AND METHODS FOR CLIMATE CONTROL DURING INSUFFICIENT SUPPLY OF POWER**

(30) Priority: 15.07.2022 US 202263389578 P
(71) Applicant: Solaredge Technologies Ltd., Herzeliya 4673335 (IL)
(72) Inventor: BERSON, Yuval, 4673335 Herzeliya (IL); GOMBERG, Bryon Roos, 4673335 Herzeliya (IL)
(74) Representative: V.O.

(57) **Abstract**

Various implementations described herein are related to determining climate settings of a climate controlled area during a duration of insufficient supply of power. Each of one or more power units may be configured to provide power to the climate controlled area. The climate setting of a survival operating mode of a climate control system of at least part of the climate controlled area may be determined, for example, based on the duration of insufficient supply of power, the total available power, and/or one or more weather condition parameters.

## Description

### CROSS-REFERENCE TO RELATED APPLICATION

The present application claims priority to US Provisional App. No. 63/389,578, filed July 15, 2022. The above identified application is incorporated by reference in its entirety.

### BACKGROUND

Some buildings that are connected to a power supply, such as a utility electrical grid, may experience a drop in electrical power input, or a power outage of the power source, which may cause uncomfortable or dangerous conditions for the residents of the building. The building may have a backup power supply, one or more energy storage devices, or a power generation system configured to supply power to the building during a decrease in power or a power outage. The power supplied from the backup power supply, one or more energy storage devices, or a power generation system during the power outage can be used to keep the residents comfortable until the power from the power supply returns.

### SUMMARY

The following presents a simplified summary of various concepts disclosed herein. This summary is not an extensive overview and is not intended to identify key or critical elements or to delineate the scope of the claims. This summary is not intended to limit or constrain the present disclosure.

Systems and methods described herein may relate to heating or cooling a climate controlled area (e.g., a building) during one or more durations of insufficient power supply (e.g., a decrease in power or a power outage). For example, a method may comprise identifying the insufficient power supply from one or more power sources and/or one or more power units. The one or more power sources may be configured to power the climate controlled area. A controller may be configured to calculate a total available power from the one or more power units and/or the power sources, and may determine (e.g., calculate, estimate) a climate setting of a survival operating mode of a climate control system of at least part of the climate controlled area. The climate control system may comprise one or more heat pumps, and/or a heat pump system, configured to implement the methods described herein.

The methods may comprise managing power loads within the climate control system, such that the available power is used for essential power loads and/or maintaining the climate setting. The climate setting of the climate control system may be configured to maintain a minimum threshold climate (e.g., a survival climate) for the duration of insufficient power supply. The climate setting may include at least one of a temperature setting, a humidity setting, and an air flow setting. Determining the temperature setting of the climate control system may include determining a condenser temperature of a condenser of the climate control system for the duration of the insufficient power supply. Determining the climate setting of the climate control system may comprise determining an evaporation temperature of an evaporator of the climate control system for the duration of the insufficient power supply.

The temperature setting may comprise a setpoint temperature for the climate control system. The temperature setting may comprise a condenser temperature. The temperature setting may comprise an evaporator temperature. The climate setting may include other condition settings. The climate settings may comprise a humidity setting of the climate control system. The air flow rate setting may comprise an airflow strength of the airflow from and/or to the climate controlled area. The air flow rate may include a fan speed value. The air flow rate setting may include one or more directions of air flow. The controller may be configured to control and/or determine the fan speed of the climate control system.

The climate control system may comprise a first mode of operation having a first temperature setting. The first temperature setting may be received from a user device (e.g., a user interface) in communication with the controller. The climate control system may comprise a second mode of operation configured to operate during the duration of insufficient power supply. The second mode of operation may comprise a second temperature setting that may be determined by the controller at a survival temperature, based on the duration of the insufficient power supply, the total available power from one or more power units configured to provide power to the heat pump system, and/or one or more weather condition parameters.

The methods may comprise receiving data associated with any one or more of the one or more weather condition parameters, indoor conditions, number of residents, specific needs of the residents, and/or data associated with the climate controlled area (e.g., size, heat loss areas, and the like). The received data may include user profiles of the residents, which may include health status, heart rate, body temperature, and the like. The methods may comprise determining (e.g., calculating, estimating) a temperature setting based on at least a portion of the received data.

The methods may comprise generating the user profiles of one or more residents of the climate controlled area, based on at least a portion of the received data. The methods may comprise receiving data from one or more wearable sensors worn by the residents, one or more personal devices belonging to the residents, and/or one or more sensors in the climate controlled area. The methods may comprise determining a comfort setting of the climate control system for one or more residents during normal operation of the climate control system (e.g., when the power from the power sources and/or the one or more power units is sufficient, such as the first mode of operation). The methods may comprise determining a climate setting of the climate control system, based on the specific needs of the resident, for the duration of insufficient power (e.g., the second mode of operation).

### BRIEF DESCRIPTION OF THE DRAWINGS

The present disclosure is illustrated by way of example and is not limited in the accompanying figures in which like reference numerals indicate similar elements and in which:
Figure 1 shows a climate control system;
Figure 2 shows a method for controlling a climate control system;
Figure 3 shows a method for controlling a climate control system;
Figure 4 shows a temperature diagram for temperature setting;
Figure 5A show a schematic diagram of a cooling cycle of a climate control system;
Figure 5B shows a property diagram of a cooling cycle of a climate control system;
Figure 6A shows temperature-entropy (T-S) diagrams of a climate control system in the heating mode during normal performance;
Figure 6B shows a T-S diagram of a climate control system in the heating mode during a power outage;
Figure 7A shows a T-S diagram of a climate control system in the heating mode during normal performance;
Figure 7B shows a T-S diagram of a climate control system in the heating mode during grid power-outage; and
Figure 8 shows a method for controlling a climate control system.

### DETAILED DESCRIPTION

In the following description of, reference is made to the accompanying drawings, which form a part hereof, and in which are shown, by way of illustration, various examples of the disclosure. It is to be understood that the examples shown and/or described are non-exclusive, and other examples may be practiced, and structural and functional modifications may be made without departing from the scope of the present disclosure.

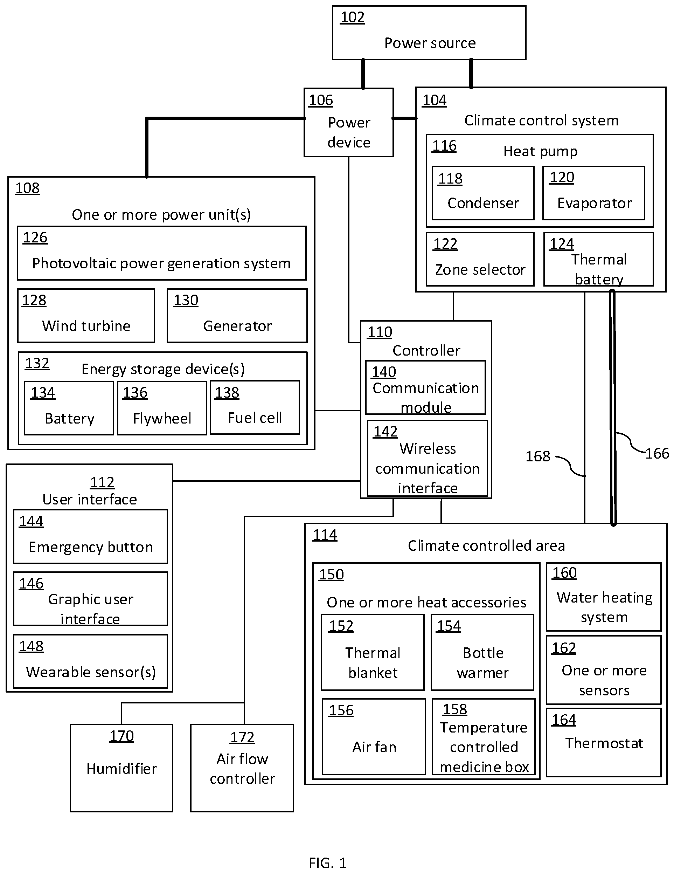

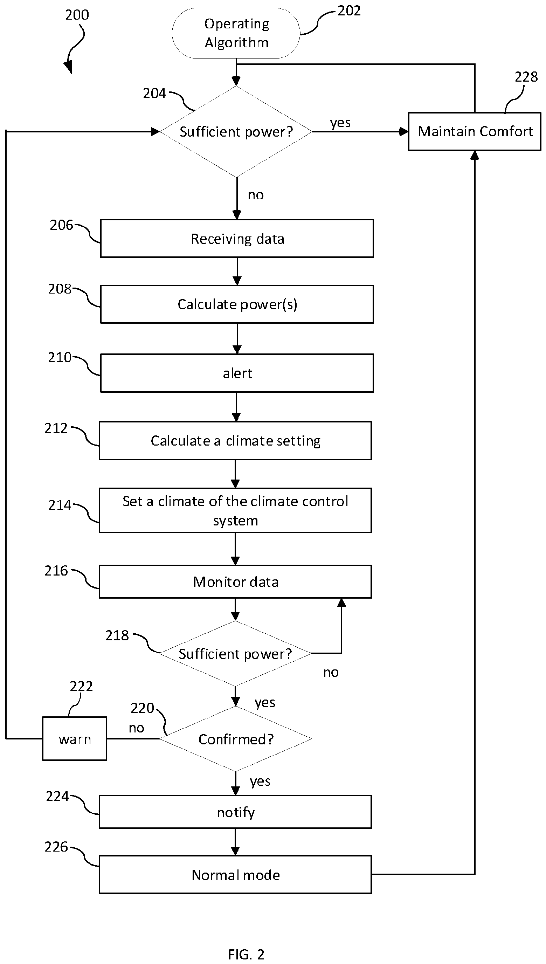

One or more aspects may be implemented in computer-usable data and computer-executable instructions, such as in one or more program modules, executed by one or more computers or other devices. Generally, program modules include routines, programs, objects, components, data structures, etc. that perform particular tasks or implement particular abstract data types when executed by one or more processors in a computer or other device. The computer-executable instructions may be stored on a computer readable medium (e.g., non-transitory computer readable medium) such as a hard disk, optical disk, removable storage media, solid state memory, RAM, etc. As will be appreciated by one of skill in the art, the functionality of the program modules may be combined or distributed. In addition, the functionality may be implemented in whole or in part in firmware or hardware equivalents such as integrated circuits, field programmable gate arrays (FPGA), or the like. Particular data structures may be used to more effectively implement one or more aspects of the disclosure, and such data structures may be within the scope of computer-executable instructions and computer-usable data described herein. For example, the system illustrated in Figure 1 and the methods illustrated in Figures 2, 3, and 8 may be implemented with a combination of hardware, firmware, and/or computer implemented instructions as described above.

Although the subject matter has been described in language specific to structural features and/or methodological acts, it is to be understood that the subject matter defined in the appended claims is not necessarily limited to the specific features or acts described herein. Rather, the specific features and acts described herein are disclosed as example forms of implementing the claims.

Reference is now made to Figure 1, which shows a climate control system 104 and a climate controlled area 114. The climate control system 104 may include one or more devices configured for transferring heat to and/or from the climate controlled area 114. The climate control system 104 may be configured to control the climate of the climate controlled area 114. The climate of the climate controlled area 114 may include parameters such as a temperature, a humidity, and an air flow rate. The climate control system 104 may include a heat pump 116, which may include a condenser 118 and/or an evaporator 120. The heat pump 116 may include a ducted heat pump or a ductless heat pump. The heat pump 116 may include one or more of an air-to-air heat pump, a water source heat pump, a geothermal heat pump, and/or an absorption heat pump. The climate control system 104 may include a heat pump system that includes one or more heat pumps 116.

The climate control system 104 may include a humidifier 170, and/or may be in communication with the humidifier 170A controller 110 (e.g., a computing device, a server) may be in operative communication with a humidifier 170 and the climate controller area 114 (e.g., the controller 110 may control the operation of the humidifier 170). The controller 110 may be configured to, via the humidifier 170, control the humidity of the climate controlled area 114. The controller 110 may be configured to control the humidity level within the climate controlled area 114. The controller 110 may be configured to set (e.g., increase and/or decrease) the humidity level within the climate controlled area 114. The controller 110 may be in communication with one or more humidity sensors configured to measure the humidity in the climate controlled area 114. The controller 110 may be configured to, using the humidifier 170, increase or decrease the level of humidity in the climate controlled area 114.

The climate control system 104 may include one or more energy storage devices, such as a battery, a thermal battery 124, a fuel cell, and/or a flywheel, for storage of energy and/or heat. The one or more energy storage devices may be in electrical communication with the heat pump 116. The one or more energy storage devices may provide storage capacity for storing electrical energy, which may be used by the climate control system 104 upon demand. For example, the electrical energy stored in the energy storage devices may be used (e.g., when there is a power failure and no electricity is provided by a power source, and/or when the power supplied from the power source is insufficient). The one or more energy storage devices may also provide electricity at night, or during other periods when the power source is limited, insufficient, and/or expensive.

The climate control system 104 may be in communication with the controller 110. The controller may be configured to operate or control the climate control system 104, which will be described in greater detail. The controller 110 may be a local controller or a remote controller. The controller 110 may be in communication with a memory module. The controller 110 may be configured to receive data from the memory module and/or send data to the memory module. The controller 110 may be configured to receive data from a power device, such as an inverter or optimizer. The controller 110 may be configured to receive data from an inverter of a photovoltaic system.

For example, a dedicated user interface 112 may be in communication with (e.g., in a wired fashion, or over a wireless network) the climate control system 104. The controller 110 may be run as an application on the user interface 112. The application may run on one or more devices (e.g., a smart phone, a tablet, a laptop/computer, and/or other appropriate devices). A resident of the building and/or a caregiver or family member of the resident may carry with the one or more devices. The controller 110 may be used within the building or outside the building, and may be controlled within the climate controlled area 114 or outside the climate controlled area 114. The controller 110 may be run as an application on one or more other appropriate locations in the climate controlled area 114 or in communication with the climate controlled area 114. Communications from or to the controller 110 may be encrypted (e.g., using various encryption methods).

The controller 110 may enable a user to manage the climate control system 104. For example, the user may be a resident of the building, a resident of the climate controlled area 114, or a caregiver or family member of a resident of the building or the climate controlled area 114. The user may be able to control the climate control system 104 at a normal operation mode, for example, when the power supplied by a power source 102 or power unit(s) 108 is sufficient.

The controller 110 may include a communication module 140 and/or a wireless communication interface 142. The wireless communication interface 142 may include a cellular interface. The communication module 140 or the wireless communication interface 142may be configured to communicate with the user interface 112. The wireless communication interface 142 may be part of the controller 110. The wireless communication interface 142may include at least one of a subscriber identity module (SIM) card or internet card. The communication module 140 may support wired or wireless communication protocols (e.g., one or more protocols of power line communication, Ethernet, Bluetooth^{™}, Wi-Fi, ZigBee^{™}, and/or a cellular network).

A user may carry at least one personal device (e.g., a smartphone, smartwatch, computer, or tablet), which may function as the remote controller or a local controller. The personal device may function as a beacon, signaling the presence of the user in the building and/or in the climate controlled area 114. If the beacon signal is detected on a local area network (LAN), the user associated with that particular beacon may be considered "present." If the beacon signal is detected on a different segment of a wide area network (WAN) than a local LAN, the user associated with that particular beacon may be considered as "remote." Similarly, if the beacon is not detected, the user associated with the personal device may be considered by the controller 110 as using a remote controller. If the controller 110 detects the beacon, the user associated with the at least one personal device may be considered by the controller 110 as using a local controller. In a home environment, the whole home may use only one LAN, and if the particular user's device is connected directly to the LAN, the associated particular user may be considered to be within the local domain of the controller 110.

The climate control system 104 may be in fluid communication 166 and/or electrical connection 168 with the climate controlled area 114. The climate control system 104 may include one or more zone selectors 122. Alternatively or additionally, the one or more zone selectors 122 may be in the climate controlled area 114 (or in a vicinity thereof). The one or more zone selectors 122 may be configured to direct heat from the heat pump 116 to the climate controlled area 114. The one or more zone selectors 112 may be configured to direct heat to one or more zones of the climate controlled area 114. Operation of the one or more zone selectors 122 at a specific (or selected) zone may enable the transfer of the heat from the climate control system 104 to the specific zone within the climate controlled area 114. The one or more zone selectors 122 may include one or more ducts configured to direct streams of air between the climate control system 104 and the climate controlled area 114. The one or more zone selectors 122 may include one or more pipes configured to direct streams of water (e.g., heated or cooled water) and/or air (e.g., heated or cooled air) between the climate control system 104 and the climate controlled area 114. The controller 110 may be configured to control the operation of one or more zone selectors 122, thereby controlling which zone(s) of the climate controlled area 114 receives heat from the climate control system 104.

The climate control system 104 may include an air flow controller 172, and/or may be in communication with the air flow controller 172. The air flow controller 172 may include one or more valves in communication with the controller 110. The one or more valves may be disposed in the vicinity of the one or more zone selectors 122 or the one or more ducts. The air flow controller 172 may be configured to control the air flow rate of the air flowing into the climate controlled area 114. The air flow controller 172 may be configured to control the air flow rate of the air flowing out of the climate controlled area 114. The controller 110 may be configured to, using the air flow controller 172, control the air flow rate into and/or out of the climate controlled area 114. The controller 110 may be configured to increase or decrease the air flow rate into and/or out of the climate controlled area 114.

The climate control system 104 may be configured to receive power from at least one of the power source 102, the one or more power units 108, a power device 106, and/or any combination thereof. The power source 102 may include one or more of a power grid and a microgrid. The one or more power units 108 may include one or more power generating systems (or power generation units) configured to generate power. The one or more power units 108 and/or power generating systems may include a photovoltaic power generation system 126. The photovoltaic power generation system 126 may include one or more photovoltaic devices (e.g., photovoltaic (PV) cells, PV panels, PV modules, PV shingles) configured to receive (e.g., collect) solar energy. The one or more power units 108 and/or power generating systems may include additional renewable power sources, such as, wind turbines 128, hydroelectric generators and the like. The one or more power units 108 and/or power generating systems may include one or more generators 130. The one or more generators 130 may be configured to generate power using fuel (e.g., diesel, biogas, natural gas, propane, petroleum). The one or more power units 108 may include one or more energy storage devices 132 that are configured to store energy. For example, the one or more power units 108 may include one or more of a battery 134, a flywheel 136, and/or a fuel cell 138.

The climate control system 104 may have a main power source and a backup power source. The main power source may be the power source from which the building receives power in a normal operating mode (e.g., in day-to-day use). The main power source may include any one or more of the power source 102, the grid, the one or more power units 108, and the one or more energy storage devices 132. For example, the main power source may include a photovoltaic system. The backup power source may be the power source from which the building receives power in a survival operating mode (e.g., when the power received from the main power source is insufficient, or is identified as insufficient). The backup power source may include any one or more of the power source 102, the grid, the one or more power units 108, and the one or more energy storage devices 132. For example, the backup power source may include a photovoltaic system.

The one or more power units 108 may be coupled to the power device 106, such that the power going from the one or more power units 108 to the climate control system 104 (and/or the climate controlled area 114) may be converted using the power device 106. The power device 106 may be in communication with the controller 110 such that the controller 110 receives data associated with the power provided by the one or more power units 108. The one or more power units 108 may serve as backup power supplies, to ensure continuous power supply, or alternatively, may complement the power source 102 and/or power generation system during normal operation. For example, the one or more power units 108 may supply electrical power to the climate controlled area 114, and/or the climate control system 104, if there is an insufficient supply of power to operate the climate control system 104 or equipment in the climate controlled areas 114 from any one or more of the power source 102, the photovoltaic power generation system 126, the wind turbine 128, and/or the generator 130.

The power source 102, the one or more power units 108, and/or the power device 106 may be in electrical communication with the controller 110, and may send data to the controller 110. The data may be associated with an amount of power supplied to the climate control system 104 and/or the climate controlled area 114. For example, the controller 110 may receive data from the power source 102, wherein the data is associated with an amount of power supplied. The data may be received in real time, continuously, periodically, and/or when an update or change occurs or is identified. The controller 110 may be configured to detect when the power received from the power source 102, or when the total power supplied to the climate control system 104 and/or the climate controlled area 114, is insufficient for normal use.

The climate control system 104 may be configured to receive electrical power from any one or more of the power source 102 and/or the power device 106. For example, the climate control system 104 may be configured to receive electrical power from the photovoltaic power generation system 126 via the power device 106.

The controller 110 may be configured to send signals associated with the operation of the climate control system 104. For example, the controller 110 may be configured to operate the climate control system 104 and/or enable an operator (e.g., a user, a resident) to control the climate control system 104 via the user interface 112. The controller 110 may be configured to receive data or instructions associated with the operation of the climate control system 104 via the communication module 140. The data may be associated with, for example, a climate setting set by a user via the user interface 112. The climate controlled area 114 may include a thermostat 164. The data or instructions associated with the operation of the climate control system 104 may include any one or more of weather forecasts, online data, data received from one or more sensors, and/or data received from an operator via the user interface 112.

The climate control system 104 may be in fluid communication 166 with the climate controlled area 114. The climate control system 104 may be configured to control a temperature within the climate controlled area 114. For example, the climate control system 104 may be configured to heat or cool the climate controlled area 114. The climate control system 104 may be configured to set the temperature of the climate controlled area 114 based on instructions received from the controller 110. The temperature may be predetermined, calculated (or estimated) by the controller 110, determined by the controller 110, or set by a user. The climate controlled area 114 may be configured to receive fluid (e.g., air, water, refrigerant fluid, etc.) from the climate control system 104. The climate controlled area 114 may be configured to receive heat from the climate control system 104. The climate control system 104 may be configured to receive heat from the climate controlled area 114.

The climate controlled area 114 may include, for example, one or more of a building (e.g., a residential building), an apartment, a house, a room within the building, a room within the apartment, an office building, one or more offices within the office building, a commercial building, and/or a hotel. The climate controlled area 114 may include one or more of a warehouse, a laboratory, a server room, and the like. The climate controlled area 114 may include one or more safe rooms (e.g., bedroom, living room, conference room, waiting room, etc.) configured for one or more residents to reside during a power outage.

The climate controlled area 114 may include one or more heat accessories 150 configured to receive heat and/or power from the climate control system 104. The climate control system 104 may be configured to control a temperature of at least one of the one or more heat accessories 150. The one or more heat accessories 150 may include one or more of a thermal blanket 152, a bottle warmer 154, an air fan 156, a temperature controlled medicine box 158, and the like, or any combination thereof.

The climate controlled area 114 may include a water heating system 160 configured to provide warm or hot water to one or more residents of the climate controlled area 114. The water heating system 160 may be configured to receive heat from the climate control system 104. The climate control system 104 may be configured to control the temperature of the water in the water heating system 160.

The climate controlled area 114 may include one or more sensors 162, which may be in communication with the controller 110. The one or more sensors 162 may include any one or more of a temperature sensor, humidity sensor, motion sensor, light/UV sensor, air quality sensor, electricity usage sensor, optical sensor, infra-red sensor, and the like. For example, the one or more sensors 162 may include a camera (e.g., video camera).

A temperature sensor may be configured to send the controller 110 data associated with the temperature within the climate controlled area 114. A humidity sensor may be configured to send the controller 110 data associated with the humidity levels within the climate controlled area 114. An air quality sensor may be configured to send the controller 110 data associated with the air quality within the climate controlled area 114. A motion sensor may be configured to send the controller 110 data associated with the presence or motion levels of the one or more residents within the climate controlled area 114. The motion sensor may be configured to send the controller 110 data when a resident enters or leaves the climate controlled area 114. An electricity usage sensor may be configured to monitor power usage within the climate controlled area 114.

The controller 110 may be configured to monitor the residents entering and/or exiting the climate controlled area (e.g., via the motion sensor). The controller 110 may be configured to use historical data of the number of residents entering and/or leaving the climate controlled area to determine the patterns of the presence of the one or more residence in the climate controlled area 114. The climate control system 104 may be configured to use the data associated with the patterns of the presence of the one or more residence in the climate controlled area 114 to determine the climate setting. The climate control system 104 may be configured to use the data associated with the patterns of the presence of the one or more residence in the climate controlled area 114 to determine the humidity settings, such as described in greater detail elsewhere herein. The climate control system 104 may be configured to use the data associated with the patterns of the presence of the one or more residence in the climate controlled area 114 to determine the air flow rate settings.

The user interface 112 may include a display, a keyboard, a mouse, one or more buttons, a microphone, an audio device, and the like. The user interface 112 may include a graphic user interface (GUI) 146 configured to enable a user to interact with, for example, an application for a personal device such as a smartphone, smartwatch, computer, or tablet. The user interface 112 and/or the personal device may include one or more wearable sensors 148 configured to collect data from one or more users wearing the one or more wearable sensors 148. The one or more wearable sensors 148 may be configured to collect one or more of a heart rate, a blood pressure, and/or a body temperature. The one or more wearable sensors 148 may be configured to send the collected data to the controller 110.

The user interface 112 may include one or more emergency buttons 144 (or any other suitable design on the user interface 112) configured to enable an operator to immediately signal the controller 110 of an emergency situation. The one or more emergency buttons 144 may be in communication with the controller 110. The one or more emergency buttons 144 may be configured to automatically trigger and/or power on an emergency setting of the controller 110 and/or the climate control system 104.

Reference is now made to Figure 2, which shows a method for controlling a climate control system. Figure 2 depicts a method 200 for controlling a climate control system (e.g., the climate control system 104). The climate control system may be configured to operate in a building, such as a residential building, a house, an office building, a commercial building, a laboratory, a hotel, a warehouse, a server room, and the like. The building may include one or more safe rooms. The building may have a climate controlled area (e.g., the climate controlled area 114). The climate controlled area may include at least a portion of the building configured to receive power during an emergency. For example, in an apartment building, each apartment may have one or more safe rooms. The safe rooms may be configured for residents to reside during an emergency (e.g., when an insufficient power supply is detected in the building). The climate controlled area may include the one or more safe rooms. Each safe room may include one or more zone selectors (e.g., the zone selectors 122) configured to direct heat to the safe room. The climate control system may include a controller (e.g., the controller 110).

At step 202, the controller may be configured to operate an algorithm. The algorithm may be associated with one or more steps of the method 200. The algorithm may be configured to run continuously, periodically, and/or at specified times. The controller may be configured to implement at least some or all of the steps of the method 200.

During normal (or regular) operation, the building may be configured to receive power from a power source, such as the main power source (e.g., the power source 102, and/or the one or more power units 108). For example, the power supplied to the building may include a combination of powers supplied by the power source 102 and the one or more power units 108, a combination of powers supplied from two or more power units 108, or power supplied by only one of the power source 102 and the one or more power units 108.

The normal (or regular) operation (such as a first mode of operation) within the building may indicate that the amount of power supplied by the power source 102 and/or the one or more power units 108 is sufficient for regular power consumption of the building (e.g., meet the power consumption standard of the building, satisfy a power consumption threshold of the loads associated with or connected to the building, satisfy a normal power consumption expectation of the loads associated with or connected to the building). For example, the normal operation of a residential building may include regular operation of home electronics, heating or cooling of the homes (or apartments) within the building, and the like.

At step 204, the method 200 may include identifying an insufficient power supply to the climate controlled area. A controller or a power device (e.g., an inverter) may determine the insufficient power supply. For example, the insufficient power supply may be insufficient for normal operation of the climate controlled area (e.g., an amount of power may be below a threshold). The insufficient power supply may be an amount of power that is lower than the amount of power required for normal operation. The insufficient power supply may include a power outage. The power supply may include an amount of power that is received from the power source and/or the one or more one or more power units. The insufficient power supply may include insufficient power received from the grid.

The insufficient power supply may include one or more of a reduction in the amount of power supplied, one or more interruptions in the amount of power supplied, a power-outage, a brownout, a blackout, a malfunction of at least one of the one or more power units, an islanding condition, an off grid condition, and/or an extreme weather condition. The controller may be configured to manage the power supplied by the power source and the one or more power units when the power received is insufficient. For example, the controller may be configured to manage the amount of power received and/or manage the loads requiring power within the building. If the controller determines that there is insufficient power supply to the climate controlled area, the method 200 may proceed to step 206. If the controller determines that there is sufficient power supply to the climate controlled area, the method 200 may proceed to step 228.

At step 206, the method 200 may include receiving data. In an example, the controller may receive the data. The data may be associated with one or more of the amount of power received, the forecasted duration of the insufficient power supply, one or more weather condition parameters (e.g., outdoor weather condition parameters), weather forecasts, user inputted data, data collected from the one or more users, required appliances or accessories in the building (e.g., the one or more heat accessories 150), data stored in the memory module, and/or the like. The received data may be associated with at least part of the climate controlled area. The data may be provided by a user, such as a resident of the building, a family member of the resident, and/or a caregiver of the resident. The received data may include collected data. The received data may include data associated with one or more of energy storage devices of the climate control system. The received data may include data associated with any one or more of a capacity, a minimum state of charge, and a current state of charge of one or more of the energy storage devices (e.g., the energy storage devices 132) of the climate control system.

The received data may include data associated with a duration of the insufficient power supply so far (e.g., until now). The received data may include the current temperature outside, indoor conditions, outdoor conditions, and the like. The received data may include a user profile of the one or more residents. The user profile may include physiological parameters of one or more residents. The user profile may include any one or more of the age, health data, chronic diseases and conditions of the one or more residents, and the like. The method may include monitoring the received data such that the data may be updated. The method may include continuously or periodically updating the received data, such as described in greater detail elsewhere herein. For example, the data may be provided (e.g., inputted) from inside the building or outside of the building, using a user interface (e.g., the user interface 112).

At step 208, the method 200 may include calculating a total available power that can be used during the insufficient power supply period. For example, the controller may determine an available energy profile, and calculate (or estimate) a total available power that can be used during the period when there is insufficient power supply to the climate controlled area. The total available energy may be calculated based on all of the power sources that may be available to the climate controlled area, based on the weather forecast, and/or based on the received data. For example, the total available energy may include the power source (e.g., the power source 102) when the power source is supplying insufficient power, and the power that can be received from the one or more power units (e.g., the one or more power units 108). If there is a power outage associated with the power source, the total available power may include a sum of the powers that can be received from the one or more power units.

At step 210, the method 200 may include alerting users of an insufficient power supply. For example, the controller may be configured to send an alert (e.g., warning) to one or more residents, and/or a family or caregiver thereof of the climate controlled area that of an insufficient power supply. The alert may indicate that the climate controlled area may be in a survival operating mode (e.g., emergency operating mode), in which the users may not change the climate setting.

The emergency operating mode may be a mode in which the grid power is insufficient. The emergency operating mode may be a mode in which the power received from an external power source, is insufficient. The emergency operating mode may be a mode in which the grid power is below a threshold. The emergency operating mode may be a mode in which the power received from one or more power sources is below a threshold. The threshold may be predetermined. The threshold may vary based on any one or more parameters, such as, for example, but not limited to, the number of residents in the building, the type of residents (e.g., based on the user profiles of the one or more residents), weather data, weather forecasts, historical data, and the like.

In an example, the one or more residents may be able to, via a user interface, to control the threshold. The one or more residents may be able to, via a user interface, instruct the controller to go into the survival operating mode. The one or more residents may be able to decide whether the survival operating mode is applied to the climate control system.

At step 212, the method 200 may include determining a climate setting of a survival operating mode of the climate control system. In an example, the controller may determine the climate setting of a survival operating mode of the climate control system. The survival operating mode may include a mode of operation of the climate control system configured to supply heat and/or cool the climate controlled area (e.g., one or more safe rooms). The climate setting may include at least one of a temperature setting, a humidity setting, and/or an air flow rate setting.

The climate setting may include a combination of two or more of the temperature setting, the humidity setting, and the air flow rate setting. For example, the climate setting (e.g., a survival climate setting) may include a humidity setting and a temperature setting without an air flow rate setting. For example, the climate setting (e.g., a comfort climate setting) may include a humidity setting, a temperature setting, and an air flow rate setting. The air flow rate setting may include a setting of the direction of the air flow.

The temperature setting of the survival operating mode may indicate a minimum threshold temperature (e.g., a survival temperature). For example, the minimum threshold temperature may be a temperature sufficient for survival. For example, the minimum threshold temperature may be between 10 and 25 degrees °C. The temperature setting may be configured to maintain the conditions of the at least part of the climate controlled area at the survival temperature. For example, the controller may configure a heat pump (e.g., the heat pump 116) of the climate control system to transfer heat to the climate controlled area to maintain the survival temperature at the climate controlled area.

The humidity setting of the survival operating mode may indicate a minimum threshold humidity (e.g., a survival humidity). For example, the minimum threshold humidity may be a humidity sufficient for survival. The air flow rate setting of the survival operating mode may indicate a minimum threshold air flow rate (e.g., a survival air flow rate). For example, the minimum threshold air flow rate may be an air flow rate sufficient for survival.

The method 200 may further include determining at least part of the climate controlled area to be used during an emergency (e.g., during the insufficient power supply period). For example, the controller may be configured to identify which one or more rooms in an apartment is a safe room. The controller may be configured to identify which portions of the safe rooms will be used during the emergency. The at least part of the climate controlled area may be determined based on the received data, such as the data received from the users. For example, for user data associated with only a portion of the building, the climate controlled area may be determined as only the portion in which there is a user present or is expected to be present in the future. For example, for user data associated with certain appliances, the climate controlled area may include the portions of the building in which the certain appliances are located. According to some aspects, the at least part of the climate controlled area may be determined based on the data saved in the memory module. The data may be associated with the power consumption of home appliances and/or accessories (e.g., the one or more heat accessories 150) over a defined period of time (e.g., prior to the insufficient power supply, during normal operation).

At step 214, the method 200 may include setting a climate of the climate control system to the climate setting. For example, the controller may set a temperature of the climate control system to the temperature setting. The controller may set the humidity of the climate control system to the humidity setting. The controller may set an air flow rate of the climate control system to the air flow rate setting. The setting may be performed automatically by the controller. For example, the controller may set the thermostat (e.g., the thermostat 164) of the climate control system to the temperature setting. For example, the controller may set the temperature of a condenser of the climate control system to the temperature setting. For example, the controller may set the temperature of the evaporator of the climate control system to the temperature setting. For example, the controller may set the temperature of the refrigerant of the climate control system to the temperature setting.

The climate setting may override a setting performed (or set) by an operator (such as a resident) of the climate controlled area (for example, using the user interface). The controller may set a condenser (e.g., the condenser 118) to the temperature setting. The controller may set an air flow rate for the climate controlled area. The controller may set a humidity level for the climate controlled area. Setting a humidity level may include applying a climate setting to the humidifier of the climate control system to a humidity setting. Setting a humidity level may include setting a hygrostat of the climate control system to a humidity setting. The hygrostat may be integrated with the heat pump system. The controller may be configured to power off the non-essential power loads during an emergency.

At step 216, the method 200 may include monitoring data associated with the survival operation mode. The controller may be configured to monitor one or more of an available energy, a power consumption, and/or the duration of the insufficient power supply. For example, the controller may be configured to monitor one or more of the available energy, the power consumption, and/or the duration by receiving data continuously or periodically. For example, the controller may receive data from one or more of the user (e.g., via the user interface 112), the one or more sensors 162, the power device, the one or more power units, the communication module 140, the wireless communication 142, the one or more energy storage devices 312, and/or the climate control system 104.

The climate control system may include a monitor configured to measure a power consumption of the climate control system. For example, the climate control system may include a monitor configured to measure a power consumption of the condenser of the climate control system. The climate control system may include a monitor configured to measure a power consumption of the evaporator of the climate control system. The monitor may be in communication with the controller such that the controller receives information of (e.g., tracks) the power consumption of the climate control system. The power storage units may include a monitor configured to measure a remaining energy supply in the power storage units. The monitor may be in communication with the controller such that the controller receives information of (e.g., tracks) the energy remaining in the energy storage devices. The monitor may be in communication with the controller such that the controller tracks the minimum state of charge in the one or more power units and/or the one or more energy storage devices. The monitor may be in communication with the controller such that the controller receives information of (e.g., tracks) the current state of charge in the one or more power units and/or the one or more energy storage devices. The monitor may be in communication with the controller such that the controller receives information of (e.g., tracks) the capacity in the one or more power units and/or the one or more energy storage units.

The one or more power units and/or the power device may include a monitor configured to measure a power output from the one or more power units and/or the power device. The monitor may be in communication with the controller such that the controller receives information of (e.g., tracks) the power output of the one or more power units and/or the power device. The controller may be configured to receive updates associated with the one or more weather condition parameters, for example, using a communication module (e.g., the communication module 140) and/or a wireless communication interface (e.g., the wireless communication interface 142). The controller may be configured to receive updates associated with which accessories (e.g., the one or more heat accessories 150) and/or appliances are used, for example, by receiving user inputted data in real time. The controller may be configured to receive updates associated with a change in the climate controlled area, for example, using one or more sensors (e.g., the one or more sensors 162) of the climate controlled area and/or wearable sensors (e.g., the wearable sensors 148) of the user interface (e.g., the user interface 112). For example, the controller may receive an update if a window is opened in the climate controlled area and/or if a resident leaves or enters the climate controlled area.

At step 218, the method 200 may include determining (e.g., checking) whether power has been reinstated in the climate controlled area. For example, the controller may check for reinstated power based on the monitoring of the amount of power that is supplied from the power source, the climate controlled area, and/or climate control system. If the controller determines that the power (e.g., sufficient power) has been reinstated in the climate controlled area, the method 200 may proceed to 220. If the controller determines that the power has not been reinstated in the climate controlled area, the method 200 may return to step 216.

At step 220, the method 200 may include determining whether the power (e.g., the reinstated power) is sufficient for a comfortable climate setting and/or normal operating mode. The method 200 may include determining whether the power (e.g., the reinstated power) is sufficient for a comfortable temperature setting (e.g., 20-30 degrees °C, a value set by the user, etc.) and/or normal operating mode.

The controller may confirm that the power is sufficient (or reinstated) using the communication module and/or the wireless communication interface. The method 200 may include confirming that the power is sufficient (or has been reinstated) by confirming with an electrical power supply company (e.g., a local company). If the power is not sufficient for a comfortable climate setting and/or normal operating mode, the method 200 may proceed to step 222. If the power is sufficient for a comfortable climate setting and/or normal operating mode, the method 200 may proceed to step 224.

If the power is not sufficient for a comfortable climate setting and/or normal operating mode, the method 200 may include scoring the hazard level of the current state of the climate control system. For example, the controller may determine a score of the hazard level of the current state of the climate control system. For example, the score of the hazard level may range between 0 and 10. For example, the score of the hazard level may range between 1 and 5. The score of the hazard level may be associated with a severity potential of the current status (e.g., the severity potential of the insufficient power). The score of the hazard level may take into account the received data. The score of the hazard level may be based on any one or more of the power received from the main power supply, the duration of the insufficient power supply so far, the expected duration of the insufficient power supply, the amount of power available from the backup power supply, historical data, user data (or data associated with the one or more residents), personal data of the one or more residents, and the like. The score of the hazard level may be based on the user selection and/or the user settings. The expected duration of the insufficient power supply may be based on historical data, weather forecasts, user inputted data, other data received by the controller, and/or the like.

The method 200 may include presenting, to a resident, the score of the hazard level. The method 200 may include presenting, to a user other than the resident (e.g., for example, a care giver, a remote family member or one or more individuals that are granted access to the system, and the like), the score of the hazard level. For example, the controller may send a notification (e.g., in step 224 as described below) to the resident or a user other than the resident the score of the hazard level.

The method 200 may include presenting, to the resident or the user, a plurality of risk factors to take into account when choosing the climate setting. For example, the controller may present, to the resident or the user, the plurality of risk factors. The plurality of risk factors may include the current weather, the weather forecast, the amount of power available, the risk level of the one or more residents, and the like. For example, one of the risk factors may include the risk level (e.g., health risk level) of the one or more residents. If a resident has a higher risk (due to physiological parameters and/or chronic disease), the method 200 may include presenting to the resident and/or the user, that there is a resident who is of a higher risk and needs at least a specific climate setting. The method 200 may include displaying a recommendation, such as, a recommendation to set the climate setting to a survival climate setting.

The method 200 may include presenting, to the user other than the resident, the score of the hazard level, the plurality of risk factors, the recommendations, optional climate settings, and the like, via a remove user interface. For example, a care giver that may be away from the climate controlled area may be able to receive the score of the hazard level, the plurality of risk factors, the recommendations, optional climate settings, and the like, via the remove user interface. The method 200 may include receiving instructions from the user other than the resident. For example, the user may choose the climate setting remotely.

The method 200 may include displaying the score via the user interface. The method 200 may include generating a plurality of optional climate settings based on the score of the hazard level. The method 200 may include presenting, to a resident, the plurality of optional climate settings. The plurality of optional climate settings may include different climate settings corresponding to different power supply options. The plurality of optional climate settings may include a conservative optional climate setting. The conservative optional climate settings may provide climate settings in which power is conserved at a maximum rate. The conservative optional climate setting may include a climate setting in which the available power would last a maximal amount of time. The conservative optional climate setting may include using the bare minimum appliances necessary. The conservative optional climate setting may include a climate setting in which the house is maintained at a live-able climate that may or may not be comfortable for the residents. The conservative optional climate setting may include distributing power to the appliances such that there is sufficient power for a comfortable climate in the climate controlled area. The conservative optional climate setting may include a climate setting that has the minimal power semi-comfort setting (e.g., a climate setting which can make (or maintain) the climate controlled area more comfortable that if there were no climate control system during the insufficient power).

The plurality of optional climate settings may include instructions for the one or more residents. For example, the instructions may include instructions to close a window. The instructions may include instructions to dress using warm clothing. The instructions may include instructions to cover with a blanket. The instructions may include instructions to turn off one or more lights or appliances in the climate controlled area.

The plurality of optional climate settings may include a comfortable climate setting. The comfortable climate setting may provide climate settings that prioritizes the comfort of the resident. The comfortable climate setting may include a climate setting in which the climate controlled area is maintained at a comfortable climate regardless of the amount of power that may or may not be available in the future. The plurality of optional climate settings may include one or more climate settings that vary in power consumption. The plurality of optional climate settings may include one or more climate settings that range between the comfortable climate setting and the conservative climate setting. For example, an optional climate setting may include a climate setting which takes into consideration the duration of insufficient power as well as the climate needed to achieve at least a minimal comfort level of the one or more residents. The method 200 may include receiving, from the user interface, a selected optional climate setting. The method 200 may include selecting one optional climate setting based on the score of the hazard level.

The method 200 may include overriding the choice of the residents. For example, the method 200 may include identifying that the selected optional climate settings may be dangerous and/or may not be able last a sufficient amount of time during the duration of insufficient power. The method 200 may include overriding the selected optional climate settings by generating a climate setting that may be similar to or different from the selected optional climate settings. The method 200 may include modifying the selected optional climate setting to be, for example, a setting that would allow the residents to be in a healthy and safe condition for a longer period of time.

At step 222, the method 200 may include generating a warning. For example, the controller may be configured to generate a message (e.g., a text, audio, and/or video) and send the message to the users, for example, via the user interface. The message may also be sent to a utility company associated with the climate controlled area. The message may indicate that the power is insufficient for a comfortable climate setting and/or normal operating mode. The message may be generated and sent periodically based on the monitoring of the data.

At step 224, the method 200 may include notifying the users of the reinstated power. The controller may send a message to the users indicating that the current power is sufficient for a comfortable climate setting and/or normal operating mode. The controller may record the data associated with the duration of the insufficient power in a database (e.g., memory module), such that the data may be used in the future durations of insufficient power. The controller may determine to enter into a recovery mode in which the one or more power units and/or the one or more energy devices are charged for the next time an insufficient power is detected. The controller may charge the one or more energy storage devices.

At step 226, the method 200 may include removing the climate setting of the climate control system, thereby returning the climate control system to a normal operating mode. For example, the controller may be configured to remove the climate setting of the climate control system by not configuring any climate parameters for the climate controlled area.

At step 228, the method 200 may include maintaining the comfortable climate setting in the climate controlled area. The method 200 may include monitoring the status of the users, for example, via the one or more sensors 162 and/or the user interface 112. For example, the controller may be configured to set a comfortable climate setting based, at least in part, on the monitored user profile. For example, when the user profile of a resident indicates a raised heart rate or blood pressure, the controller may be configured to lower the temperature of the comfortable climate setting. The controller may be configured to adjust the comfortable climate setting based, at least in part, on the collected data associated with the status of the users and/or the user profiles. A user profile may include a comfort profile that includes data associated with one or more comfortable climate settings of the individual user. The controller may maintain the comfortable climate setting in the climate controlled area until an insufficient power supply to the climate controlled area is determined (e.g., at step 204).

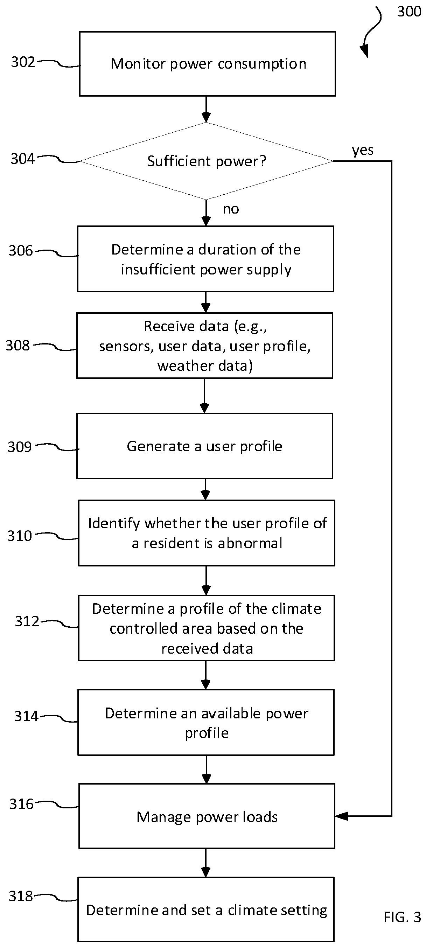

Reference is made to Figure 3, which shows a method for controlling a climate control system. A method 300 as depicted in Figure 3 may include one or more steps of the method 200. The method 200 may include one or more steps of method 300. A controller (e.g., the controller 110) may be configured to implement at least some or all of the steps the method 300.

At step 302, the method 300 may include checking and/or monitoring the amount of power (e.g., the current or voltage) supplied by various power sources (e.g., the power source 102, the one or more one or more power units 108). A controller may be configured to identify a normal amount of power required for the operation of a climate controlled area (e.g., the climate controlled area 114) in normal operation. The controller may be configured to set a comfort setting (e.g., comfortable climate setting) and maintain the comfort setting when the amount of power is sufficient for normal operation of the climate controlled area.

At step 304, the method 300 may include identifying an insufficient power supply to the climate controlled area. For example, the insufficient power supply may be insufficient for the normal operation of the climate controlled area (e.g., an amount of power may be below a threshold). The power supply may include an amount of power that is received from a power source (e.g., the power source 102) and/or one or more one or more power units (e.g., the one or more one or more power units 108). The insufficient power supply may include an amount of power that is lower than usual. The insufficient power supply may include an amount of power that is below average for the residence and/or for the specific one or more residents in the residence. The insufficient power supply may include an amount of power that is below average for the time of year. The insufficient power supply may include one or more of a reduction in the amount of power supplied, one or more interruptions in the amount of power supplied, a power-outage, a brownout, a blackout, a malfunction of at least one of the one or more power units, an islanding condition, an off grid condition, and/or an extreme weather condition. The controller may be configured to manage the power supplied by the power source and the one or more power units when the power received is insufficient. For example, the controller may be configured to manage the amount of power received and/or manage the loads requiring power within the building. If the controller determines that there is insufficient power supply to the climate controlled area, the method 300 may proceed to step 306. If the controller determines that there is sufficient power supply to the climate controlled area, the method 300 may proceed to step 316.

At step 306, the method 300 may include determining a duration of the insufficient power supply. For example, the controller may determine a duration of the insufficient power supply by receiving the duration of the insufficient power supply from an external source (e.g., from a user and/or via the communications module). The controller may determine (e.g., estimate, calculate) the duration of the insufficient power supply based on, for example, one or more of received data, received user input, and/or data associated with part durations of insufficient power, or any combination thereof. The duration of the insufficient power supply may be received from a user (e.g., resident) of a building, an operator of an application comprising a user interface (e.g., the user interface 112), and/or the like. For example, in an apartment building having a plurality of apartments, the duration may be received from one user, and that duration may be applied to the entire building. The duration may be received via a cellular internet connection, such as the wireless communication interface 142. The duration may be received using the communication module 140 (e.g., the internet). The duration may be determined using data received from an electrical power supply company (e.g., a local company, the company supplying the power of the power source 102, the company supplying the one or more power units 108). The duration may be provided by a user via the user interface.

Additionally or alternatively, the duration may be determined using a default setting (or a default duration), which may include a predetermined length of time based on previous durations of insufficient power supply. The duration may be determined using a default setting based on a safety factor. The received duration may be multiplied by the safety factor to ensure the actual duration will be equal to or shorter than the determined duration. The controller may determine a worst-case default duration if, for example, no information is available about the duration of the insufficient power supply.

At step 308, the method 300 may include receiving data. The data may be associated with one or more of the amount of power received, the forecasted duration of the insufficient power supply, one or more weather condition parameters (e.g., outdoor weather condition parameters), weather forecasts, user inputted data, data collected from the one or more users, required appliances or accessories in the building (e.g., the one or more heat accessories 150), data stored in the memory module, and/or the like. The received data may be associated with at least part of the climate controlled area. The data may be provided (e.g., inputted) by a user, such as a resident of the building, a family member of the resident, and/or a caregiver of the resident. The data may include a user profile of the one or more residents. The data may be provided from inside the building or outside of the building, using a user interface (e.g., the user interface 112).

At step 309, the method 300 may include generating a user profile for each of the one or more residents. The user profile may include a survival envelope (e.g., data associated with the survival operating mode for the user). The survival envelope may include data associated with and two or more of the temperature, humidity level, and air flow rate as a function of time. The survival envelope may include data associated with a climate setting as a function of time. The survival envelope may include data associated with a maximal climate setting in which the resident can survive(e.g., as a function of the duration of the climate setting). The survival envelope may include data associated with a minimal climate setting in which the resident can survive (e.g., as a function of the duration of the climate setting).

The survival envelope may include data associated with temperature as a function of time. The survival envelope may include data associated with a maximal temperature at which the resident can survive. The survival envelope may include data associated with a maximal temperature at which the resident can survive, as a function of the duration of the temperature (e.g., how long the resident can live at the maximal temperature). The survival envelope may include data associated with a minimal temperature at which the resident can survive. The survival envelope may include data associated with a minimal temperature at which the resident can survive, as a function of the duration of the temperature.

The survival envelope may include data associated with humidity as a function of time. The survival envelope may include data associated with a maximal humidity level at which the resident can survive. The survival envelope may include data associated with a maximal humidity level at which the resident can survive, as a function of the duration of the humidity level (e.g., how long the resident can live at maximal the humidity level). The survival envelope may include data associated with a minimal humidity level at which the resident can survive. The survival envelope may include data associated with a minimal humidity level at which the resident can survive, as a function of the duration of the humidity level.

The survival envelope may include data associated with air flow rate as a function of time. The survival envelope may include data associated with a maximal air flow rate at which the resident can survive. The survival envelope may include data associated with a maximal air flow rate at which the resident can survive, as a function of the duration of the air flow rate. The survival envelope may include data associated with a minimal air flow rate at which the resident can survive. The survival envelope may include data associated with a minimal air flow rate at which the resident can survive, as a function of the duration of the air flow rate.

Additionally, the user profile may include a comfort envelope (e.g., data associated with a comfort setting for the user). The comfort envelope may include data associated with a climate setting as a function of time. The comfort envelope may include data associated with a maximal climate setting in which the resident can be comfortable (e.g., as a function of the duration of the climate setting). The comfort envelope may include data associated with a minimal climate setting in which the resident can be comfortable (e.g., as a function of the duration of the climate setting).

The comfort envelope may include data associated with temperature as a function of time. For example, the comfort envelope may include data associated with a maximal temperature (e.g. temperature below a second predetermined threshold) at which the resident can be comfortable (e.g., as a function of the duration of the temperature). The comfort envelope may include data associated with a minimal temperature (e.g. temperature above a second predetermined threshold) in which the resident can be comfortable (e.g., as a function of the duration of the temperature).

The comfort envelope may include data associated with humidity as a function of time. For example, the comfort envelope may include data associated with a maximal humidity level (e.g. humidity below a first predetermined threshold) at which the resident can be comfortable (e.g., as a function of the duration of the humidity level). The comfort envelope may include data associated with a minimal humidity level (e.g. humidity above a second predetermined threshold)at which the resident can be comfortable (e.g., as a function of the duration of the humidity level).

The comfort envelope may include data associated with air flow rate as a function of time. The comfort envelope may include data associated with a maximal air flow rate (e.g. air flow rate below a first predetermined threshold) in which the resident can be comfortable (e.g., as a function of the duration of the air flow rate). The comfort envelope may include data associated with a minimal air flow rate (e.g. air flow rate above a second predetermined threshold) in which the resident can be comfortable (e.g., as a function of the duration of the air flow rate).

The method 300 may include calculating any one or more of a temperature setting, a humidity setting, and/or an air flow rate setting. The method 300 may include calculating a climate setting. The climate setting, the temperature setting, humidity setting, and/or air flow rate setting may be determined based, at least in part, on the comfort envelope of the one or more residents, and/or the duration of the insufficient power supply and/or the expected duration of the insufficient power supply. The method 300 may include corelating the duration of time in the comfort envelope (e.g., the duration of the temperature, the duration of the humidity level, and/or the duration of the air flow rate) with the duration of the insufficient power supply and/or the expected duration of the insufficient power supply. The method 300 may include equating the duration of time in the comfort envelope with the duration of the insufficient power supply and/or the expected duration of the insufficient power supply.

The controller may be configured to monitor the usage of power during the normal (or comfortable) operation of the climate controlled area. For example, the controller may be configured to receive data associated with the operation of different appliances and/or accessories (e.g., the one or more heat accessories 150) in one or more apartments of the climate controlled area. The controller may be used to monitor the use of power using the user interface and/or one or more sensors (e.g., one or more sensors 162). The user interface and/or one or more sensors may be used to collect data associated with the user and/or the climate controlled area, and send the data to the controller. The user interface may include one or more wearable sensors (e.g., the one or more wearable sensors 148), which may be used to collect any one or more of a heart rate, a blood pressure, and/or a body temperature of the user. The controller may be configured to analyze the collected data and generate a status of the one or more residents based on the collected data. The status may indicate, for example, one or more of a location of the user, a level of comfort of the user, a state of the health of the user, and/or the like. The user profile may be based, at least in part, on the status of the one or more residents. The user profile may be updated using the status of the one or more residents. The status of the one or more residents and/or the user profile may be updated continuously and/or periodically.

At step 310, the method 300 may include identifying whether the user profile of the one or more residents is abnormal. For example, the controller may be configured to compare the status or state of the user with previous data of the user associated with a normal status or state. The controller may determine whether the user profile of the one or more residents is abnormal based on the medical history and/or the state of health of the one or more residents. Based on the comparison, the controller may be configured to determine a medically abnormal state or status (e.g., a lowered or raised heart rate, body temperature, blood pressure, a user is walking slower than when in a normal state, and/or a user has moved less than when in a normal state). Based on the determined medically abnormal state, the controller may be configured to generate and send an alert to the one or more residents, a family member and/or caregiver of the resident, and/or a medical facility (e.g., a nearby hospital).

The method 300 may include identifying the comfort envelope of the one or more residents. The comfort envelopes of the one or more residents may differ from each other due to differences in physiological parameters, health conditions, age, gender, and the like. The method 300 may include generating a collective comfort envelope which includes the comfort envelopes of all the residents in the residence (currently or expected to be in the residence in the near future). The collective comfort envelope may include an intersect of the comfort envelopes of all the residents in the residence. For example, a senior resident and/or a resident with a chronic disease may need a higher minimal climate setting and/or a lower maximal climate setting. For example, a senior resident and/or a resident with a chronic disease may need a higher minimal temperature and/or a lower maximal temperature.

The one or more sensors may include, for example, one or more of a temperature sensor, humidity sensor, motion sensor, light/UV sensor, air quality sensor, electricity usage sensor, optical sensor (e.g., a camera or video camera), and/or infra-red sensor. The one or more sensors may be used to collect data associated with the climate controlled area. The collected data may include thermal data of the climate controlled system. For example, the one or more sensors may collect data associated with a heat dispersion within the climate controlled area. As another example, the one or more sensors 162 may collect data associated with a heat leak from the climate controlled area (e.g., an open or broke window). The controller may be configured to monitor the presence of one or more residents (or users) within the climate controlled area, for example, using the optical sensor or motion sensor.

At step 312, the method 300 may include determining a profile of the climate controlled area based on the received data. The method 300 may include determining the profile of the climate controlled area based, at least in part, on the comfort envelope of the one or more residents (and/or the collective comfort envelope). For example, the controller may be configured to use the collected data, from the one or more sensors 162, to determine (e.g., calculate, estimate) the profile of the climate controlled area.

The memory module may include a database that stores the data. The data may be associated with, for example, one or more buildings, one or more apartments within the building, and/or one or more different climate controlled areas within the building. The memory module may store a user profile (or resident profile) that includes the power consumption of the user in the building and/or in his or her apartment in the building. Data associated with an apartment in the building may include one or more individual user profiles. The individual user profiles may differ based on the power consumption of the individual users. Data associated with an apartment or home may include a climate control system profile, which may include profiles of users who reside in the climate controlled area.

The method 300 may further include determining (e.g., calculating, estimating) a required power for the climate controlled area. The required power may include the amount of power required for the normal operation of the climate controlled area. The determination of the required power may be based on the received data associated with the duration of the insufficient power supply. For example, the controller may be configured to determine the required power based on, for example, the received data associated with the amount of power supplied in the insufficient power supply, one or more user profiles of the users within the building and/or apartment in the building, the received data associated with the weather (e.g., the weather forecast, current weather conditions such as one or more weather condition parameters), the size of one or more rooms of the climate control area, and/or the data stored in the memory (or the database) associated with previous durations of insufficient power supply. The received data associated with the weather may be provided by a user and/or received automatically via the communication module of the controller.

The method 300 may further include determining (e.g., calculating, estimating) a profile (e.g., required power profile) of the climate control system based on the received data. For example, the required power profile of the climate control system may be determined based on one or more of the user profiles of the users associated with the climate controlled area, the collected data associated with the climate controlled area from the one or more sensors, the data provided by the user associated with the climate controlled area, the user profile, the one or more weather condition parameters, weather forecast, the data stored in the database, and/or the duration of the insufficient power supply.

The method 300 may further include determining one or more weather condition parameters external to the climate controlled area. The weather condition parameters may include one or more of the ambient temperature outside the building, humidity levels outside the building, humidity levels inside the residence (or the climate controlled area), wind speed, wind direction, cloud cover (or cloud amount), and/or precipitation type (e.g., rain, hail, snow, drizzle). The one or more weather condition parameters may include one or more weather forecasts. The weather forecasts may be associated with the upcoming minute(s), hour(s), day(s), and/or week(s). The method 300 may include receiving the weather forecast via one or more of the controller, the one or more sensors, a cellular or internet connection (e.g., the wireless communication 142), and/or the user interface (e.g., via user input). The controller may be configured to receive data indicating the weather forecast via an inverter of the PV power generation system 126. The weather forecast may be used to determine the duration of the insufficient power supply, and/or determine a total available power, as described herein.

The method 300 may further include receiving conditions of at least part of the climate controlled area. The conditions (e.g., indoor conditions) may indicate the condition inside the climate controlled area, a specific portion of the climate controlled area, or one or more areas (e.g., buildings) not covered by the climate controlled area. The conditions may include one or more of a temperature (or ambient temperature), air flow rate, and/or humidity levels inside the climate controlled area. The method 300 may further include receiving the conditions via any one or more of the controller 110, the one or more sensors 162, a cellular or internet connection (e.g., via the wireless communication interface 142), the user interface 112 (e.g., by receiving input of a user), and/or any combination thereof. The conditions may be used for determining the total available power.

At step 314, the method 300 may include determining an available power profile. For example, the controller may be configured to determine (e.g., calculate, estimate) a total available power that can be used during the duration of the insufficient power supply. The controller may be configured to determine the total available power based on all of the power sources that may be available to the climate controlled area, the weather forecast, and/or the received conditions. For example, the total available power may include the power source 102 when the power source 102 is supplying insufficient power, as well as the power that can be received from the one or more power units 108. If there is a power outage associated with the power source 102, the total available power may include a sum of the powers that can be received from the one or more power units 108.

The controller may be configured to determine the total available power by determining the total power that can be received from each of the one or more power units. The one or more power units may include, for example, one or more of one or more energy storage devices (e.g., the energy storage devices 132), a PV power generation system (e.g., the PV power generation system 126), a wind turbine (e.g., the wind turbine 128), and/or a generator (e.g., the generator 130). The one or more energy storage devices may be configured to provide the climate controlled area with stored energy. The one or more power units may include an energy storage system comprising the one or more energy storage devices. The energy storage devices may include, for example, at least one of a battery (e.g., the battery 134), a thermal battery (e.g., the thermal battery 124), a flywheel (e.g., the flywheel 136), and/or a fuel cell (e.g., the fuel cell 138).

For one or more power units that include one or more PV power generation system, the controller may be configured to determine the total available power based on how much power the PV power generation system is able to generate during the duration of the insufficient power supply. Additionally or alternatively, the controller may be configured to determine the total available power based on the one or more weather condition parameters and/or the weather forecast, the location of the power generating system in relation to the equator, the time of year (e.g., the season, or date), and/or the temperature surrounding the PV power generation system. For example, for a weather forecast in which there is sunlight, the controller may be configured to determine the total available power based on determining a duration (e.g., a number of hours/minutes) of sunlight that is expected during the duration of insufficient power supply. The total available power may include the power that may be generated using the PV power generation system during the sunlight.

The total available power may include deep discharge of the one or more energy storage devices. For example, the total available power may include the energy the battery could provide at a deep discharge of the battery (e.g., when a battery (e.g., the battery 134, the thermal battery 124) is connected to the climate controlled area). In addition, the total available power may include the energy the fuel cell could provide at a deep discharge of the fuel cell (e.g., when the fuel cell is connected to the climate controlled area).

Additionally or alternatively, the controller may be configured to determine the total available power based on determining an amount of power that the generator can supply. For example, the controller may be configured to determine the total available power based on receiving (or measuring) an amount of fuel in the generator, and determining (e.g., calculating, estimating) how much power can be provided to the climate controlled area using the amount of fuel (e.g., when one or more power units include one or more generators). The determination of the available power may be further based on external fuel storages that may be available in the climate controlled area (or a vicinity thereof).

At step 316, the method 300 includes managing power loads. For example, the controller may be configured to manage the power loads within the climate controlled area. The controller may be configured to identify non-essential power loads in the climate controlled area. The non-essential power loads may include electrical appliances and/or accessories (e.g., the one or more heat accessories 150) that may not be needed during an emergency. For example, the non-essential power loads may include lighting in areas other than the climate controlled area, and/or heating or cooling mechanisms (e.g., fans, air conditioning, radiators) outside of the climate controlled area. The management of the non-essential power loads may include preventing the usage of specific plugs within or outside of the climate controlled area (e.g., a smart plug, the communication module 140). The controller may be configured to manage the power loads by prioritizing the power loads within the climate controlled area. For example, the controller may be configured to generate a rank of priority for each power load within the climate controlled area, and based on the total available power and/or the rank of each power load, determine which power load receives power during the duration. The rank may be weighted based on the amount of power required to power the power load and/or the importance of the power load (e.g., a fridge for storing food may be more important than other power loads). The controller may be configured to identify one or more power loads as non-essential based on the rank of the power loads, and may power off the non-essential power loads during an emergency.

The controller may be configured to compare the required power (e.g., for the power loads) with the total available power. Based on a determination that the required power is larger than the total available power, the controller may be configured to determine (e.g., calculate, estimate) a climate setting. Based on a determination that the required power is less than the total available power, the controller may be configured to enable (e.g., allow) a user to adjust a setting of the climate control system.

At step 318, the method 300 may include determining a climate setting of a survival operating mode of the climate control system. The survival operating mode may indicate to supply heat to the climate controlled area sufficient for the users to survive. For example, the controller may be configured to set a heat pump (e.g., the heat pump 116) of the climate control system at the temperature setting. The temperature setting may be configured to maintain the conditions of the at least part of the climate controlled area 114 at a survival temperature, which may be sufficient for survival of one or more residents. The climate controlled area may maintain such temperature for at least the duration of the insufficient power supply. The climate setting may be configured to maintain the conditions of the at least part of the climate controlled area 114 at a survival climate, which may be sufficient for survival of one or more residents. The climate controlled area may maintain such climate for at least the duration of the insufficient power supply.

The survival operating mode may be configured to supply heat to one or more rooms (e.g., safe rooms) within the climate controlled area. The climate control system may heat or cool the climate controlled area at the survival operating mode (e.g., when the insufficient power supply has been determined).

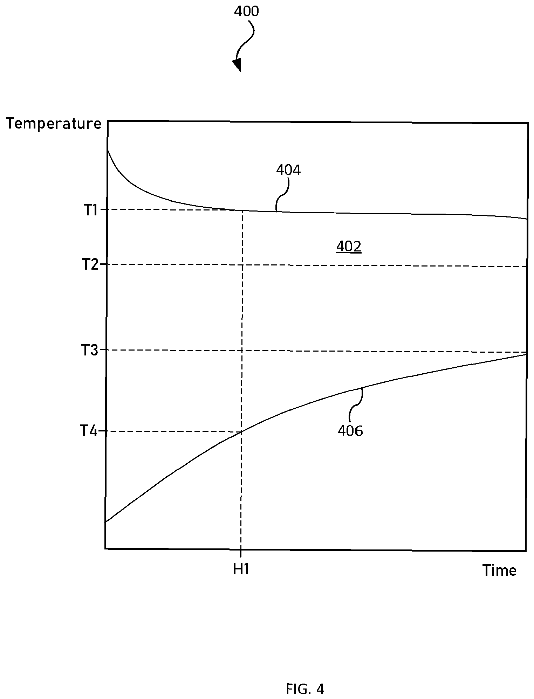

Reference is made to Figure 4, which shows a temperature diagram for a temperature setting. The temperature of the survival operating mode may be equal to or greater than a minimum survival temperature. The minimum survival temperature may be pre-set. The minimum survival temperature may be determined (e.g., calculated, estimated) based on the number of residents in the climate controlled area (e.g., the climate controlled area 114), and/or the user profiles of the residents in the climate controlled area (e.g., for example, diabetic residents may need a higher survival temperature setting than non-diabetic residents). The time axis of the temperature diagram may represent the duration of insufficient power.

Additionally or alternatively, the climate setting and/or the temperature setting of the survival mode may be determined based on the duration of the insufficient power supply, as shown in a diagram 400. A controller (e.g., the controller 110) may be configured to determine (e.g., receive, calculate, estimate) at least a portion of a temperature diagram (or an individual temperature diagram) for each resident based on the received data (e.g., the user profile of the resident, inputted data, online data). The controller may be configured to receive a predetermined generic temperature diagram that may be relevant to a plurality of health conditions, ages, genders, and/or medical histories. The temperature diagram may include data associated with a temperature (or a range of temperatures) that is safe for one or more residents of the climate controlled area. The temperature diagram may include an intersection of a plurality of individual temperature diagrams. Each individual temperature diagram may be associated with an individual resident residing in the climate controlled area. The intersection may include a set of all temperatures (as a function of the amount of time) which belongs to all of the individual temperature diagrams.

The temperature diagram 400 shows an exemplary temperature aspect of the comfort envelope. The temperature diagram 400 may include a safe temperature zone 402. The safe temperature zone 402 may include or indicate the comfort envelope. For example, temperatures T2 and T3 may indicate the safe temperature zone 402, and may indicate a range of temperatures considered to be comfortable to the resident. Additionally or alternatively, a predetermined range of temperatures can be associated with comfort (e.g., the maximal temperature and the minimal temperature). The safe temperature zone 402 may include a temperature (or a range of temperatures) in relation to the amount of time that a resident can stay in each temperature (or range of temperatures). The temperature diagram 400 may include a maximal temperature line (e.g., curve) 404 as a function of the amount of time. The temperature diagram 400 may include a minimal temperature line (e.g., curve) 406 as a function of the amount of time. The amount of time may include the amount of time of the duration of the insufficient power supply. For example, for a duration of insufficient power supply that may last H1 hours, as shown in Figure 4, the temperature setting of the survival operating is a temperature between T1 and T4. For example, T1 may be a point on the maximal temperature line 404 at the time point H1. For example, T4 may be a point on the minimal temperature line 406 at the time point H1.

It is to be understood that the temperature diagram 400 is an exemplary diagram. The temperature diagram 400 shows an exemplary survival envelope (a range between the maximal temperature line 404 and the minimal temperature line 406), which may be different for different individuals. The survival envelope may include a range of temperatures between the minimal temperature line 406 and the maximal temperature line 404 as a function of time (e.g., the amount of time of the duration of the insufficient power supply). The temperature diagram 400 shows an exemplary comfort envelope (a range between T2 and T3), which may be different for different individuals.

Different temperature diagrams may include different minimal temperature lines and/or different maximal temperature lines (e.g., the maximal temperature line 406 and the minimal temperature line 404 of the temperature diagram 400). The minimal temperature lines and maximal temperature lines may be symmetrical. The minimal temperature lines and maximal temperature lines may be asymmetrical. The minimal temperature line may or may not reach T3. The maximal temperature line may or may not reach T2. Additionally or alternatively, any one or more of the minimal temperature lines, the maximal temperature lines, T2, and T3 may change as a function of the humidity.

For a duration lasting H1 hours, when the climate control system 104 is configured to cool (e.g., remove heat from) the climate controlled area (or a portion of the climate controlled area), the temperature setting may be lower than T1. The temperature setting may be determined based on the total available power and/or the power loads within the climate controlled area, such that the temperature setting may be set to a temperature closer to the comfort range (e.g., T2 to T3) (e.g., when the total available energy is available for lowering the temperature setting to a temperature closer to the comfort range). For a duration of H1 hours, when the climate control system is configured to heat the climate controlled area, the temperature setting may be greater than T4. The temperature setting may be determined based on the total available power and/or the power loads within the climate controlled area, such that the temperature setting may be set to a temperature closer to the comfort range (e.g., when the total available energy is available for increasing the temperature setting to a temperature closer to the comfort range). The controller may enable (e.g., allow) a user to choose the temperature setting from an allowable range, based on the total available power.

For example, the temperature T1 may range between 20 to 45 degrees Celsius. The temperature T1 may range between 30 to 35 degrees Celsius. The temperature T1 may range between 27 to 42 degrees Celsius. The temperature T1 may range between 25 to 40 degrees Celsius.

For example, the temperature T2 may range between 19 to 33 degrees Celsius. The temperature T2 may range between 24 to 27 degrees Celsius. The temperature T2 may range between 15 to 35 degrees Celsius. The temperature T2 may range between 22 to 30 degrees Celsius.

For example, the temperature T3 may range between 22 to 28 degrees Celsius. The temperature T3 may range between 20 to 25 degrees Celsius. The temperature T3 may range between 20 to 24 degrees Celsius. The temperature T3 may range between 18 to 26 degrees Celsius.

For example, the temperature T4 may range between 10 to 25 degrees Celsius. The temperature T4 may range between 15 to 20 degrees Celsius. The temperature T4 may range between 13 to 23 degrees Celsius. The temperature T4 may range between 12 to 22 degrees Celsius.

Similar to the temperature diagram 400, the controller may be configured to generate a humidity diagram and/or an air flow rate diagram. The controller may be configured to generate a diagram which includes a combination of the temperature and humidity. The controller may be configured to generate a diagram which includes a combination of the temperature, humidity, and time (or duration of insufficient power supply). The controller may be configured to generate a diagram which includes a combination of the temperature, humidity, and air flow rate. The controller may be configured to generate a diagram which includes a combination of the temperature humidity, air flow rate, and time (or duration of insufficient power supply). For example, the diagram may be multi-dimensional (e.g., three-dimensional).

The controller may be configured to determine (e.g., receive, calculate, estimate) a humidity setting of a survival operating mode of the climate control system. The survival operating mode may include a mode of operation of the climate control system configured to set a humidity (e.g., a humidity level) within the climate controlled area.

The controller may be configured to determine at least a portion of a humidity diagram for the humidity setting. The humidity setting may be determined based on the number of residents in the climate controlled area, and/or the user profiles of the residents in the climate controlled area. The humidity diagram may include a safe humidity zone which may include a humidity level (or a range of humidity levels) as a function of the amount of time that the resident can stay in each humidity setting. The humidity diagram may include a maximal humidity level as a function of the amount of time. The humidity diagram may include a minimal humidity level as a function of the amount of time.

The humidity setting of the survival mode may be based on the duration of the insufficient power supply. The controller may be configured to determine at least a portion of the humidity diagram (or an individual humidity diagram) for each resident based on the received data (e.g., the user profile of the resident, inputted data, online data). The controller may be configured to receive a predetermined generic humidity diagram which may be relevant to a plurality of health conditions, ages, genders, and/or medical histories. The humidity diagram may include data associated with a humidity (or a range of humidity levels) that is safe for one or more residents of the climate controlled area. The humidity diagram may include an intersection of a plurality of individual temperature diagrams. The maximal temperature, minimal temperature, maximal humidity, the minimal humidity, the minimal air flow rate, and or the maximal air flow rate may be determined based on the received data (e.g., the user profile, age, gender, medical history of the resident).

The climate setting (e.g., the temperature setting, the humidity setting, and/or the air flow rate setting) of the survival mode may be based on the survival envelope of the one or more residents. The climate setting of the survival mode may be based on the survival envelope of the temperature diagram, the humidity diagram, and/or the air flow rate diagram, or any combination thereof. The climate setting of the survival mode may include a setting (e.g., a temperature setting, a humidity setting, and/or an air flow rate setting) which requires the minimum energy consumption while remaining within the survival envelope. For example, during a duration of insufficient power supply in which the climate controlled area needs to be heated, the survival setting may be a temperature setting on the minimal temperature line 406 (or a corresponding minimal line of the humidity diagram, the air flow rate diagram, and/or a diagram which includes a combination of any two of the temperature, humidity, and the air flow rate). For example, during a duration of insufficient power supply in which the climate controlled area needs to be cooled, the survival setting may be a temperature setting on the maximal temperature line 404 (or a corresponding maximal line of the humidity diagram, the air flow rate diagram, and/or a diagram which includes a combination of any two of the temperature, humidity, and the air flow rate).

The climate setting of the survival mode may be a setting based on the longest duration of insufficient power on the diagram. The climate setting of the survival mode may be a setting based on the indefinite duration of insufficient power. The climate setting of the survival mode may be a setting based on a longer duration of insufficient power than the expected duration of insufficient power.

The controller may be configured to issue (e.g., send) an alarm, to a resident, a family member of the resident, and/or a caregiver of the resident (e.g., when the temperature setting is low than a minimum survival temperature, and/or the humidity setting is lower than a minimum survival humidity level). Additionally or alternatively, the controller may be configured to issue an alarm, to a resident, a family member of the resident, and/or a caregiver of the resident (e.g., when the temperature setting is greater than a minimum survival temperature, and/or the humidity setting is greater than a minimum survival humidity level).

The controller may be configured to determine the climate setting and/or the temperature setting based on the user profile of each resident. The controller may be configured to monitor the status of the one or more residents in real time during the duration of insufficient power supply, and/or change the temperature and/or humidity settings based on changes in the status of the one or more residents. For example, the controller may be configured to lower the temperature of the temperature setting (e.g., if an increase in blood pressure or heart rate of a resident is detected).

Additionally or alternatively, the controller may be configured to determine the climate setting of the survival operating mode of the climate control system based on the one or more weather condition parameters. For example, the temperature setting may be determined based on the need to cool (or remove heat from) the climate controlled area (e.g., if one or more weather condition parameters indicate summer, heat, temperature, humidity levels, wind speeds, and/or directions of the wind speeds, lack of wind, or other parameters that indicate heating up the climate controlled area). Alternatively, the temperature setting may be determined based on the need to heat the climate controlled area (e.g., if one or more weather condition parameters indicate a low temperature such as winter or below water-freezing temperature).

Additionally or alternatively, the controller may be configured to determine the climate setting based on the total available power, which may also be determined based on the one or more weather condition parameters. For example, the total available power may be determined based on a predicted (or estimated) amount of energy that may be generated from the wind (e.g., if windy weather and/or a wind turbine (e.g., the wind turbine 128) are available to generate power from the wind). For example, the total available power may be determined based on a predicted (or estimated) amount of energy that may be generated from the sun (e.g., if the current weather is a sunny day (or a forecast of the weather is a sunny day) and/or a PV power generating system is working).

Additionally or alternatively, the controller may be configured to determine the climate setting based on different loads in the residence and/or in the climate control system. By managing the loads in the climate controlled area, the controller may be configured to determine (e.g., calculate, estimate) how much power can be used to heat or cool the climate controlled area. The controller may be configured to manage the loads. For example, the controller may be configured to remove non-essential loads based on the total available power and the climate diagram. The climate setting may be determined by determining how much of the total available power may be received by the loads and how much of the total available power may be used to heat/cool the climate controlled area. The climate setting may also be based on the amount of power that the one or more accessories (e.g., the one or more heat accessories 150) may need to operate throughout the duration of insufficient power supply.

Additionally or alternatively, the controller may be configured to determine the climate setting based on, for example, one or more of the size of the climate controlled area, a heat loss function from previous usage (or previous durations of the insufficient power supply), power consumption of the condenser, power consumption of the evaporator, and/or a calculated (or estimated) heat loss of the climate controlled area.

Additionally or alternatively, the controller may be configured to determine a plurality of accessories (e.g., the one or more heat accessories 150) that receive power during the insufficient power supply. For example, if the power required to heat/cool the climate controlled area to a safe temperature, a safe humidity level, and/or a safe air flow rate (e.g., a temperature that is in the safe temperature zone of the temperature graph), is subtracted from the total available power, and the remaining power is insufficient to power the power loads (e.g., the essential power loads) and/or the accessories, the controller may be configured to determine which accessories receive power. The controller may be configured to determine which accessories may receive power during the insufficient power supply based on data received from the resident (or operator), for example, if the data indicates a specified accessory that is irrelevant to the resident at the time of the insufficient power supply. The data received from the resident (or operator) may be collected prior to the insufficient power supply.

Additionally or alternatively, the controller may be configured to determine the temperature setting based on determining (e.g., calculating, estimating) a water temperature setting for a water heating system (e.g., the water heating system 160) of the climate controlled area. The water temperature setting may be determined based on a water temperature diagram, similar to the temperature diagram depicted in Figure 4. The water temperature setting may be the same as or different than the temperature setting of the heat pump (e.g., the heat pump 116), and/or the heat pump system.

For heating a climate controlled area, the temperature setting may include the minimal comfort temperature in the comfort envelope of the one or more residents (or the collective comfort envelope) (e.g., temperature T3 of the temperature diagram 400). For heating a climate controlled area, the temperature setting may include the minimal temperature line 406 in the comfort envelope of the one or more residents (or the collective comfort envelope). For cooling a climate controlled area, the temperature setting may include the maximal comfort temperature in the comfort envelope of the one or more residents (or the collective comfort envelope) (e.g., temperature T2 of the temperature diagram 400). For cooling a climate controlled area, the temperature setting may include the minimal temperature line 404 in the comfort envelope of the one or more residents (or the collective comfort envelope).

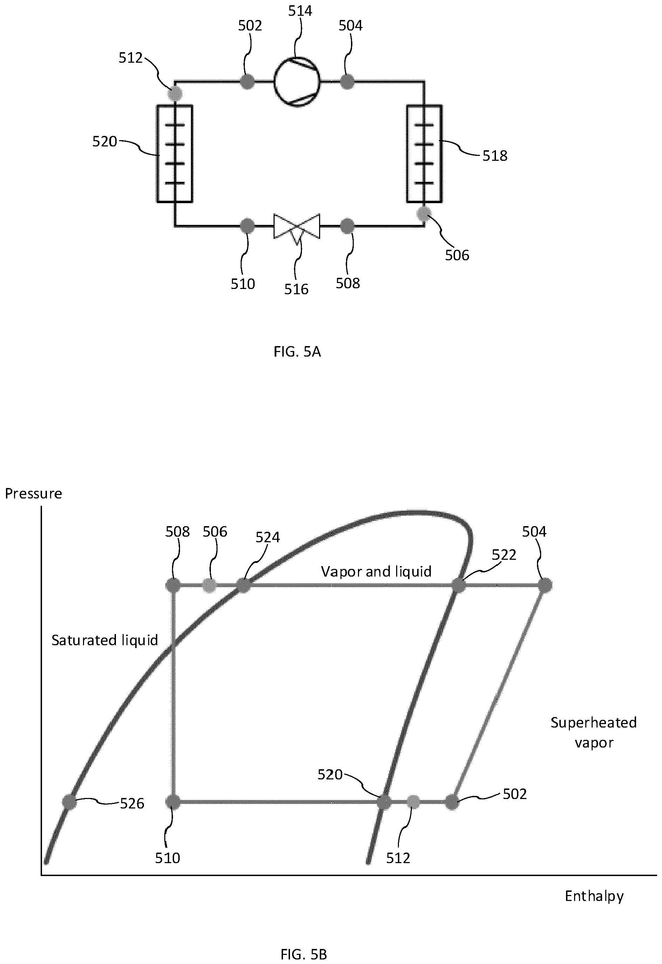

Figure 5A shows a schematic diagram of a climate control system. Figure 5B shows a property diagram of a cooling cycle of the climate control system. A controller (e.g., the controller 110) may be configured to determine the climate setting of a climate control system (e.g., the climate control system 104) based on determining a condenser temperature of a condenser of the climate control system for the duration of the insufficient power supply. The condenser temperature may be different than the ambient temperature in a climate controlled area (e.g., the climate controlled area 114). The climate setting may be configured such that the condenser temperature reduces the power consumed by the climate control system.

The climate control system may include a heat pump system having one or more condensers (e.g., the one or more condensers 118). The heat pump system may be in communication with a controller, such as the controller 110 and/or an integral controller of the heat pump system, which may implement one or more steps of the method 200 and/or the method 300 using the heat pump system. The integral controller may be in communication with the controller and/or one or more of the climate controlled area, one or more power units (e.g., the one or more power units 108), a power device (e.g., the power device 106), a user interface (e.g., the user interface 112), and/or a power source (e.g., the power source 102).

The climate control system and/or the heat pump system may include one or more zone selectors (e.g., the one or more zone selectors 122). The climate control system and/or the heat pump system may include a damper configured to direct airflow to one or more specified rooms of the climate controlled area in which the heat pump system is operating (e.g., the areas that are maintained at the determined climate setting). The integral controller and/or the controller may be configured to control the damper. For example, the integral controller and/or the controller may be configured to direct airflow to a room in which a resident is present.

The heat pump system may have a first operation mode. The first operation mode may have a first climate setting. The first operation mode may be a normal (or regular) mode, in which the resident may choose the climate setting (e.g., comfort setting, or normal operation of the heat pump system). The first climate setting may be received from the user interface and may include one or more instructions provided by the user.

The controller and/or the integral controller may be configured to operate the damper during the first operation mode to direct an airflow to one or more rooms in the climate controlled area. The damper, at the first operation mode, may be controlled by the resident via the user interface, the controller, and/or the integral controller. At the first operation mode, the damper may be used to direct an airflow in the climate controlled area such that the operation of the heat pump system is at a comfortable (or desired) temperature (e.g., a temperature set by the user).

The climate control system and/or the heat pump system may include an emergency button (e.g., the emergency button 144) in communication with the controller. The emergency button may be configured to switch between the first mode of operation and a second mode of operation. The emergency button may enable a user to switch between the first mode of operation and the second mode of operation. The emergency button may be part of the user interface. For example, the emergency button may be part of a graphic user interface (e.g., the GUI 146) of a software running on a personal device (e.g., a tablet, smartwatch, computer, smartphone). The emergency button may be a physical button positioned in the climate controlled area.

The heat pump system may be configured to operate at a second operation mode during the duration of insufficient power supply. The second operation mode may be the survival operating mode, and may operate at a second climate setting. The second climate setting may be configured (e.g., fixed) by the integral controller and/or the controller at a survival climate (for example, a survival temperature and/or a survival humidity level). The survival climate may be determined based on at least one of: the duration of the insufficient power supply, the total available power from one or more power units configured to provide power to the heat pump system, and/or the one or more weather condition parameters.

The integral controller and/or the controller may be configured to identify the insufficient power supply in the power source (e.g., the power source 102, the one or more power units 108) connected to the heat pump system. The integral controller and/or the controller may be configured to determine (e.g., calculate, estimate) the second climate setting (e.g., the climate setting described in method 200 and method 300). The integral controller and/or the controller may be configured to switch the heat pump system to the second mode of operation (e.g., when the insufficient power supply is identified).

The first climate setting and/or the second climate setting may be the temperature settings of the one or more condensers. The temperature of the one or more condensers may be determined based on the determined temperature setting of the climate setting. For example, in order to maintain the climate controlled area at a temperature setting that cools the climate control area, the temperature of the condenser may need to be about a number of (e.g., 10, a predetermined number) degrees lower than the temperature setting of the climate controlled area. For example, in order to maintain the climate controlled area at a temperature setting that heats the climate control area, the temperature of the condenser may need to be about a number of (e.g., 10, a predetermined number) degrees higher than the temperature setting of the climate controlled area.

The heat pump system may be configured to transfer heat to/from the climate controlled area, during the first operation mode. At the first operation mode, the heat pump system may be used to cool or heat a larger size area than during the second operation mode. The heat pump system may include a plurality of heat pumps. A portion of the heat pumps may be used to transfer heat to/from areas other than the climate controlled area. In an example, that portion of the heat pumps may be idle (or not in use) during the second operation mode. Alternately or additionally, the airflow from/to the heat pump system may be directed by one or more zone selectors and/or duct(s). At the first operation mode, the one or more zone selectors and/or damper may be used to direct airflow to/from areas other than the climate controlled area. At the second operation mode, the one or more zone selectors and/or damper may be used to direct airflow to/from the climate controlled area.

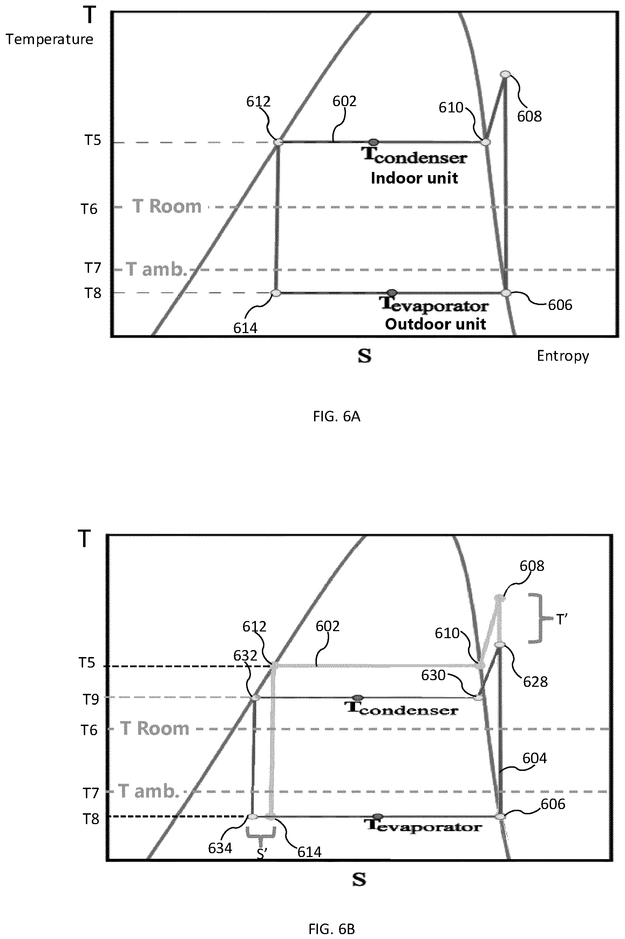

Figure 6A shows temperature-entropy (T-S) diagrams of a climate control system in heating mode during normal performance. Figure 6B shows T-S diagrams of the climate control system in heating mode during a power outage. The heat pump system may be configured based on the description in connection with Figures 5A and 5B and Figures 6A and 6B. A heating cycle may also be depicted using a T-S diagram, as shown in Figures 6A and 6B. Figure 6A shows a T-S diagram of the heat pump system at the first operating mode (e.g., the normal operating mode). Figure 6B shows the T-S diagram of Figure 6A (referred to as graph 602), and a T-S diagram of the heat pump system at the second operating mode (e.g., the survival operating mode). During the heating cycle, heat may be taken from outdoors and transferred indoors using the heat pump system. The refrigerant fluid may be configured to circulate through the heat pump (e.g., the heat pump 116) or the heat pump system, alternately absorbing, transporting and releasing heat. The refrigerant fluid may include liquid, gas, and/or a mixture of liquid and gas (e.g., depending on its location).

At a compressor suction point 502, the refrigerant may be in a gas state, and may then be passed through a compressor 514 configured to compress the gas, thereby reducing the volume of the gas and causing the gas to heat (e.g., from the temperature T8, an increase is depicted from a point 606 to a point 608 in Figure 6A, and the increase of temperature is depicted from the point 606 to a point 628 in Figure 6B). Then, the gas may be discharged from the compressor 514, at a compressor discharge point 504. The compressor 514 may be configured to compress the gas, thereby increasing the temperature of the gas. The gas (or refrigerant) is then transferred through a condenser 518 (e.g., the condenser 118), where the gas may change from a condensation dew point 522, to a condensation bubble point 524. The condenser 518 may be configured to condense the refrigerant into a liquid, thereby giving off heat from the gas to the surroundings (e.g., the climate controlled area). The refrigerant may then exit the condenser 518 at the condenser out point 506. The temperature decrease of the condenser is shown in Figure 6A between the points 608 and 610, and in Figure 6B between the points 628 and 630.

The heating cycle may include additional subcooling of the refrigerant at a point 508. The liquid (or refrigerant) may pass through an expansion device 516 configured to lower the pressure, thereby causing a temperature drop. The temperature decreases of the condenser 518 is shown in Figure 6A between the points 612 and 614, and in Figure 6B between the points 632 and 634.

The refrigerant may then become a low temperature liquid and/or gas. The expansion device 516 may include a valve (e.g., an expansion valve). The refrigerant may then exit the expansion device 516 at a point 510. The refrigerant may then pass through an evaporator 520 (e.g., the evaporator 120). The refrigerant passing through the evaporator 520 may absorb heat from the surrounding of the evaporator 520, thereby boiling. The evaporation bubble point of the refrigerant is shown at a point 526 in Figure 5B. The refrigerant may then become a low-temperature gas (or vapor). After exiting the evaporator 520, at a point 512, the refrigerant may then be directed into the compressor 514.

In an example, when heating the climate controlled area at the second operating mode (e.g., the survival operating mode), the temperature of the condenser may be set to a predefined degree (e.g., between 8 and 20 degrees °C above the second temperature setting (or the temperature setting), between 10 and 17 degrees °C above the second temperature setting (or the temperature setting), between 8 and 15 degrees °C above the second temperature setting (or the temperature setting), between 10 and 15 degrees °C above the second temperature setting (or the temperature setting)).

As shown in Figures 6A and 6B, the temperatures of the condensers 518 (e.g., T5 indicates the first temperature setting and T9 indicates the second temperature setting) may define the amount of work used during the heating cycle. The graph of the first operating mode has a larger area defined by the graph 602 than the area defined by the graph 604 of the second operating mode. The area defined by the graph depicts the work of the heating cycle. During the first operating mode, the temperature T5 of the condenser 518 may be defined by the comfort temperature setting (e.g., the temperature of the condenser 518 may be required to be high in order to heat the climate controlled area by the heat released at the condenser 518).

At the second operating mode, the temperature T9 of the condenser 518 may be lower than the temperature of the condenser 518 at the first operating mode, such that the amount of work on the compressor is reduced. Due to the lower condenser 518 temperature, the efficiency of the evaporator 520 and the condenser 518 may increase, thus generating an increase in the coefficient of performance (COP), where the COP may be a ratio between the rate at which the heat pump transfers thermal energy and the amount of electrical power required to do the pumping. By decreasing the condenser 518 temperature, the amount of power needed to operate the heat pump system may decrease. The controller may be configured to determine the temperature setting (or the second temperature setting) by determining the condenser 518 temperature. The determination of the condenser 518 temperature may be based on one or more of the total available power, the available power, the power consumption of the condenser, the power consumption of the evaporator, and/or the heat loss function.

For example, the temperature T5 may range between 35 and 55 degrees Celsius. The temperature T5 may range between 40 and 50 degrees Celsius. The temperature T5 may range between 37 and 52 degrees Celsius. The temperature T5 may range between 31 and 56 degrees Celsius.

For example, the temperature T6 may range between 18 and 33 degrees Celsius. The temperature T6 may range between 22 and 27 degrees Celsius. The temperature T6 may range between 17 and 30 degrees Celsius. The temperature T6 may range between 20 and 35 degrees Celsius.

For example, the temperature T7 may range between -30 and 30 degrees Celsius. The temperature T7 may range between -35 and 35 degrees Celsius. The temperature T7 may range between -25 and 25 degrees Celsius. The temperature T7 may range between -27 and 27 degrees Celsius.

For example, the temperature T8 may range between -40 and 25 degrees Celsius. The temperature T8 may range between -35 and 20 degrees Celsius. The temperature T8 may range between -35 and 15 degrees Celsius. The temperature T8 may range between -40 and 20 degrees Celsius.

For example, the temperature T9 may range between 25 and 50 degrees Celsius. The temperature T9 may range between 30 and 45 degrees Celsius. The temperature T9 may range between 35 and 50 degrees Celsius. The temperature T9 may range between 30 and 55 degrees Celsius.

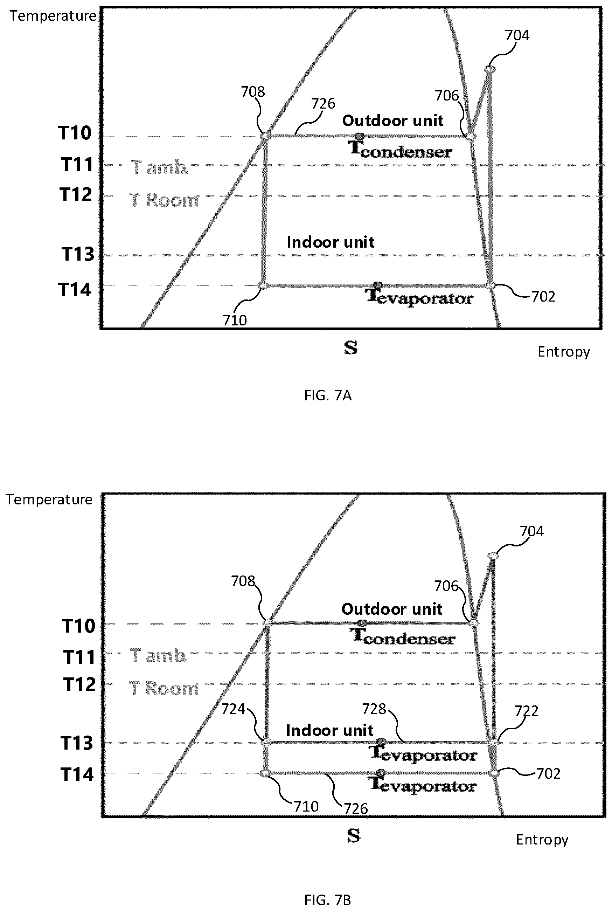

Figure 7A shows a T-S diagram of a climate control system in a cooling mode during normal performance. Figure 7B shows a T-S diagram of the climate control system in the cooling mode during a power outage. During a heating cycle, heat may be taken from indoors (e.g., the climate controlled area and/or a portion thereof) and transferred to outdoors using a heat pump system (e.g., the heat pump 116). A refrigerant fluid may be configured to circulate through the heat pump system, alternately absorbing, transporting, and releasing heat. Depending on its location, the refrigerant fluid may be liquid, gas, and/or a mixture of liquid and gas.

During a cooling cycle, the refrigerant may enter the compressor (e.g., at the points 702 and 722, where the vapor is superheated to the point 704). The refrigerant may be desuperheated (e.g., at a point 706) and then condensed to a point 708 using the condenser 518. Between the point 708 and a point 724, the temperature and pressure of the refrigerant may be decreased. The refrigerant may be then transferred through the evaporator 520 (e.g., between the points 724 and 722 in a graph 726, and/or between the points 710 and 702 in a graph 728). The refrigerant passing through the evaporator 520 may absorb heat from the surrounding (e.g., the climate controlled area 114) of the evaporator 520, thereby cooling the surrounding.

When cooling the climate controlled area at the second operating mode, the evaporating temperature may be set to a predefined degree (e.g., between 6 and 17 degrees Celsius below the second temperature setting (or the temperature setting), between 5 and 12 degrees Celsius below the second temperature setting (or the temperature setting), between 9 and 15 degrees Celsius below the second temperature setting (or the temperature setting), between 8 and 13 degrees Celsius below the second temperature setting (or the temperature setting)).

As shown in Figures 7A and 7B, the temperatures of the evaporators 520 (e.g., the temperature T14 for the first temperature setting and the temperature T13 for the second temperature setting) may define the amount of work used during the cooling cycle. The graph of the first operating mode has a larger area defined by the graph 726 than the area defined by the graph 728 of the second operating mode. The area defined by each graph depicts the work of the cooling cycle. During the first operating mode, the temperature T14 of the evaporator 520 may be defined by the comfortable temperature setting (e.g., the temperature of the condenser 518 may be required to be low in order to cool the climate controlled area by absorbing more heat using the evaporator 520). At the second operating mode, the temperature T13 of the evaporator 520 may be higher than the temperature of the evaporator 520 at the first operating mode, such that the amount of work on the evaporator 520 is reduced. Due to the lower evaporation temperature, the efficiency of the evaporator 520 and the condenser 518may increase, thus generating an increase in the COP. By increasing the evaporator temperature, the amount of power needed to operate the heat pump system may decrease. The controller may be configured to determine the temperature setting (or the second temperature setting) by determining the evaporator 520 temperature. The determination of the evaporation 520 may be based on one or more of the total available power, the available power, and/or the heat loss function.

For example, the temperature T10 may range between 25 to 65 degrees Celsius. The temperature T10 may range between 35 to 60 degrees Celsius. The temperature T10 may range between 37 to 62 degrees Celsius. The temperature T10 may range between 27 to 63 degrees Celsius.

For example, the temperature T11 may range between 10 to 50 degrees Celsius. The temperature T11 may range between 15 to 55 degrees Celsius. The temperature T11 may range between 15 to 46 degrees Celsius. The temperature T11 may range between 13 to 40 degrees Celsius.

For example, the temperature T12 may range between 18 to 33 degrees Celsius. The temperature T13 may range between 22 to 27 degrees Celsius. The temperature T13 may range between 15 to 35 degrees Celsius. The temperature T13 may range between 25 to 30 degrees Celsius.

For example, the temperature T13 may range between 0 to 30 degrees Celsius. The temperature T13 may range between 5 to 20 degrees Celsius. The temperature T13 may range between 0 to 55 degrees Celsius. The temperature T13 may range between 5 to 27 degrees Celsius.

For example, the temperature T14 may range between 0 to 20 degrees Celsius. The temperature T14 may range between 0 to 15 degrees Celsius. The temperature T14 may range between 5 to 10 degrees Celsius. The temperature T14 may range between 0 to 10 degrees Celsius.

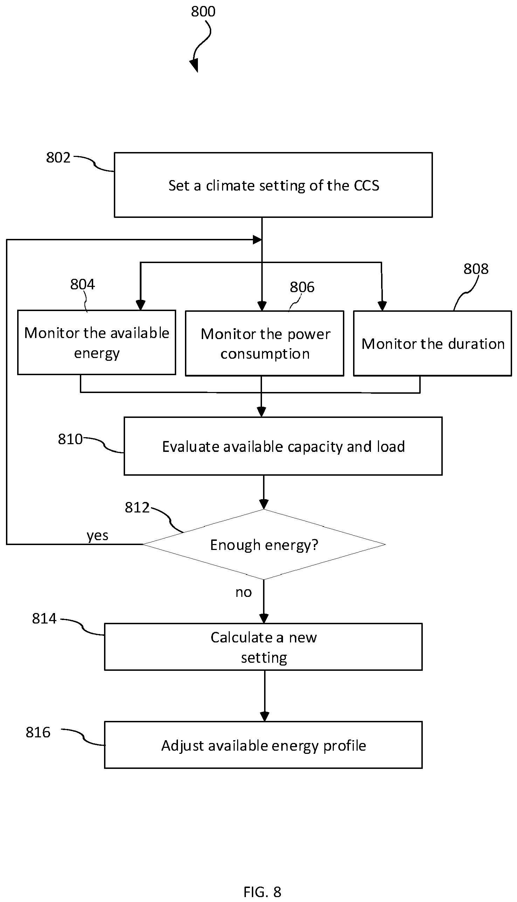

Reference is made to Figure 8, which shows a method for controlling a climate control system. The steps of a method 800 as depicted in Figure 8 may include one or more steps of one of the methods 200 and 300. The steps of one of the methods 200 and 300 may include one or more steps of method 800. A controller (e.g., the controller 110) may be configured to implement at least some or all of the steps of the method 800.

At step 802, the method 800 may include setting a climate setting of a climate control system. For example, the method 800 may include setting a thermostat (the thermostat 164) of a climate control system (e.g., the climate control system 104) to the temperature setting. The controller may be configured to set the climate setting automatically. The climate setting may override a setting performed by an operator (e.g., a resident) of the climate control system. The controller may be configured to set a condenser temperature (e.g., the condenser 518 or the condenser 118 temperature) to the temperature setting of the climate setting. The controller may be configured to set a humidity level for a climate controlled area (e.g., the climate controlled area114). For example, the controller may be configured to set a hygrostat of the climate control system to the humidity setting. For example, the controller may be configured to set a humidifier of the climate control system to the humidity setting. The hygrostat may be integrated with the heat pump system. The controller may be configured to power off the non-essential power loads during an emergency.

At step 804, the method 800 may include monitoring the available power (e.g., available energy). For example, the controller may be configured to monitor the available power (e.g., energy) by determining (e.g., calculating, estimating) the available power based on all of the power sources that may be available to the climate controlled area (e.g., at least one of the one or more power units 108, the power device 106, and the power source 102). Additionally or alternatively, the determination of the available power may be based on an update in the weather forecast. For example, when an update of the weather forecast is received, the controller may be configured to determine (e.g., calculate, estimate) the available energy based on the new (e.g., updated) weather forecast. Additionally or alternatively, the determination of the available power may be based on the received conditions.

The controller may be configured to determine the available power by determining, for each of the one or more power units, the total power which can be received therefrom. For example, for one or more PV power generation systems 126, the method 800 may include determining the available power by determining (e.g., calculating, estimating) how much power the PV power generation system 126 may be able to generate during the duration, based on an updated duration and/or an updated weather forecast. In addition, the determination of the available power in one or more power units may include determining an amount of power that a generator (e.g., the generator 130) can supply based on an update of the amount of fuel left in the generator and/or an update in the one or more weather condition parameters. The determination of the available power may include assessing available energy stored in the one or more power storage units.

The method 800 may include monitoring the power generation of the one or more power units. For example, the controller may be configured to compare the power generation of the one or more power units with the predicted power generation for the one or more power units, and take into account the difference in the power generation during the duration of insufficient power supply. For example, the determined total available energy may be higher than the actual available energy (e.g., if the weather forecast predicted a specific day to be a sunny day when that day is actually cloudy (e.g., when the weather forecast is wrong). The determination of the available power may be based on the difference in the predicted generated power and the actual generated power.

At step 806, the method 800 may include monitoring the power consumption. The method 800 may include monitoring the power consumption of the condenser of the climate control system. The controller may be configured to measure in real time an amount of energy outputted from at least one of the power device, the one or more power units, and/or the power source, to one or more of the climate control system, the climate controlled area, the controller, and/or the user interface.

At step 808, the method 800 may include monitoring the duration of insufficient power supply. For example, the controller may be configured to receive updates associated with the duration of insufficient power supply. The controller may be configured to receive updates associated with a change in the weather forecast, which may indicate a longer or shorter duration. The controller may be configured to receive data from a power supply company which may indicate a change in the duration, and/or a user associated with a change in the duration. The controller may be configured to determine whether the power has been reinstated from the power source and/or the power device. The controller may determine that the power has been reinstated based on whether there is sufficient power for normal operation in the climate controlled area.

At step 810, the method 800 may include determining (e.g., evaluating, calculating, and/or estimating) the available capacity of the climate control system (e.g., an available power profile). The method 800 may include determining (e.g., evaluating, calculating, and/or estimating) the available power profile. The method 800 may include determining (e.g., evaluating, calculating, and/or estimating) the current load and/or the expected load of the climate control system.

The available energy profile may include the amount of power currently available in the one or more power storage units during the duration of insufficient power supply. The available energy profile may include data associated with one or more of the monitored available power, the monitored power consumption, and/or the monitored duration. The available energy profile may include the predicted amount of power that can be generated by the one or more power units during the duration of insufficient power supply. The available energy profile may include an amount of power (e.g., predicted power) that can be received from the power source during the duration of insufficient power supply. The available energy profile may include a range of power that may be available for the duration of insufficient power supply. The available energy profile may include a heat loss function. The heat loss function may determine (e.g., calculate, estimate) heat loss within the climate controlled area (e.g., depicting heat loss from a leak) and/or the climate control system.

The heat loss function may be configured to determine the amount of heat loss during at least a part of the duration of insufficient power supply (e.g., during the duration so far, if the amount of heat loss is determined during the duration). The heat loss function may indicate whether the power outputted by the one or more power storage units is smaller than the determined total available energy of the one or more power storage units. The heat loss function may indicate when the power outputted for reaching a specific temperature setting is greater than the determined power needed to reach the temperature setting, or alternatively, if the temperature in the climate controlled area is lower than the determined temperature setting, even though the correct amount of power was supplied to the climate control system and/or the climate controlled area.

In an example, the controller may be configured to determine the heat loss of at least part of the climate controlled area (e.g., a room) prior to and/or during the duration of insufficient power supply. The heat loss of at least part of the climate controlled area may indicate an insulation level of the climate controlled area. The heat loss may be determined based on, at least in part, the insulation level of the climate controlled area.

The method 800 may include generating a heat loss function (e.g., in real time, before, during, or after a duration of insufficient power). The controller may be configured to generate the heat loss function based, at least in part, on data associated with previous durations of insufficient power. The method 800 may include generating the heat loss function based, at least in part, on one or more of the monitored available energy, the monitored power consumption, and/or the monitored duration. The method 800 may include updating the heat loss function in real time, based on the monitored data. At step 810, the method 800 may include determining (e.g., calculating, estimating) the amount of power necessary for the remainder of the duration, using the heat loss function.

At step 812, the method 800 may include determining if there is enough power to continue using the current climate setting. The method 800 may include determining if there is enough power to continue using the current climate setting based, at least in part, on the available energy profile (or capacity) and the evaluated load. The determination may be based on, at least in part, the heat loss function. For example, the controller may be configured to determine (e.g., calculate, estimate) real available power by inputting the available power into the heat loss function. The real available power may be a value indicative of the amount of power that can be used during the duration of insufficient power supply, after taking into account the heat loss trends in the climate controlled area and/or the climate control system. The real available power may be evaluated based on the power consumption of the condenser. The real available power may be evaluated based on the available energy sources.

At step 814, the method 800 may include determining (e.g., calculating, estimating) a new setting. The determination of the new setting may be based on the real available power. The new setting may include a setpoint temperature, a temperature setting for the thermostat of the climate control system, a condenser temperature, an evaporator temperature, a humidity setting of the climate control system, an airflow strength of the airflow from/to the climate controlled area, and/or a fan speed value. The setting may include one or more directions of air flow. The controller may be configured to control and/or determine the fan speed of the climate control system.

The method 800 may include comparing the real available power with the determined available power. The method 800 may include adjusting the heat loss function (e.g., when the real available power is different than the determined available power). The method 800 may include identifying if a current heat loss in the climate controlled area can be fixed by the resident. For example, the method 800 may include identifying a heat leak in the climate controlled area using the one or more sensors and/or the user interface. The method 800 may include alerting the resident of an identified heat leak (e.g., a window and/or door is open) in the climate controlled area. The heat loss function may be adjusted based on a change in the number of residents in the climate controlled area.

At step 816, the method 800 may include adjusting the available energy profile. The method 800 may include adjusting the available energy profile based on the evaluated capacity and/or load. The method 800 may include adjusting the energy profile based on changes detected in at least one of the monitored available energy, the monitored power consumption, and/or the monitored duration.

The controller may be configured to set a temperature setting for one or more heat accessories (e.g., the one or more heat accessories 150, the thermal blanket 152, the bottle warmer 154, the air fan 156, the temperature controlled medicine box 158), if, for example, the real available power is not sufficient to last throughout the duration at a temperature setting within the safe temperature zone. The one or more heat accessories may be used by the resident to keep their body temperature at a safe temperature, if, for example, the real available power is insufficient. The method 800 may include alerting a user of an insufficient real power, and instructing a user associated with the heat accessories. The method 800 may include enabling a user to choose a preferred heat accessory. For example, the resident may use the thermal blanket 152 to keep warm because there may not be enough power to keep the entire climate controlled area warm (e.g., if the real power is insufficient). The method 800 may include outputting power only to one or more of the heat accessories.

The controller (e.g., the controller 110) may be configured to repeat one or more steps of the method 200, the method 300, and/or the method 800. The steps may be repeated (or performed) regularly, continuously, periodically, and/or when an update is identified. For example, the controller may be configured to repeat one or more of the steps between every 10-100 minutes. The update may include a change in the amount of the power supplied by the power source and/or the one or more power units, a change in the power consumption of at least one of the one or more accessories, a change in the power consumption of the climate control system, a change in the weather forecast, a change in the power output of the one or more power units and/or the power device, and/or a change in a power storage unit (e.g., a change in the battery 134 (or the one or more energy storage device 132) storage levels).

The controller may be configured to identify an intermittent insufficient power supply. For example, the intermittent insufficient power supply may indicate that the power received from the power source and/or the one or more power units is sufficient and then insufficient in repeating increments. The controller may be configured to repeat one or more steps in the method 200, the method 300, and/or the method 800 during an identified intermittent insufficient power supply. The controller may be configured to repeat the one or more steps in the method 200, the method 300, and/or the method 800 periodically until the power supply is sufficiently reinstated, and/or until the power supply is sufficiently reinstated.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the disclosure. Accordingly, the foregoing description is by way of example only, and is not limiting.

The skilled person will appreciate that aspects of the disclosure include one or more methods, systems, or apparatuses as in any of the following clauses:

### Clauses

1. A method comprising:
   identifying an insufficient supply of power for climate control of an area;
   determining a duration of the insufficient supply of power;
   determining a weather condition parameter;
   calculating a total available power from one or more power sources, wherein each of the one or more power sources is configured to provide power to the area;
   calculating, based on the duration of the insufficient supply of power, the total available power, and the weather condition parameter, a climate setting of an operating mode of a climate control system of at least part of the area; and
   setting a climate setting of the climate control system.
2. The method of clause 1, wherein the temperature setting of the climate control system is configured to maintain a temperature for the at least part of the area for the duration.
3. The method of any one of clauses 1 to 2, wherein the climate setting comprises at least one of a temperature setting, a humidity setting, and an air flow setting.
4. The method of any one of clauses 1 to 3, wherein the climate setting comprises a temperature setting.
5. The method of any one of clauses 1 to 4, wherein the climate setting comprises a humidity setting.
6. The method of any one of clauses 1 to 5, wherein the climate setting comprises an air flow setting.
7. The method of any one of clauses 1 to 6, wherein the climate setting is greater than a minimum threshold temperature.
8. The method of any one of clauses 1 to 7, further comprising sending an alarm based on a determination that the climate setting is less than a minimum threshold.
9. The method of any one of clauses 1 to 8, further comprising sending an alarm based on a determination that the temperature setting is less than a minimum threshold temperature.
10. The method of any one of clauses 1 to 9, further comprising sending an alarm based on a determination that the humidity setting is less than a minimum threshold humidity level.
11. The method of any one of clauses 1 to 10, further comprising sending an alarm based on a determination that the climate setting is above a maximal threshold.
12. The method of any one of clauses 1 to 11, further comprising sending an alarm based on a determination that the temperature setting is above a maximal threshold temperature.
13. The method of any one of clauses 1 to 12, further comprising sending an alarm based on a determination that the humidity setting is above a maximal threshold humidity level.
14. The method of any one of clauses 1 to 13, wherein the weather condition parameter comprises an ambient temperature outside the climate controlled area.
15. The method of any one of clauses 1 to 14, wherein the weather condition parameter is related to power production of the one or more power sources.
16. The method of any one of clauses 1 to 15, further comprising setting the thermostat to the temperature setting.
17. The method of any one of clauses 1 to 16, wherein setting of the thermostat is performed automatically by a controller.
18. The method of any one of clauses 1 to 17, wherein the setting of the thermostat overrides a setting performed by an operator of the climate control system.
19. The method of any one of clauses 1 to 18, wherein the calculating the climate setting of the climate control system comprises determining a condenser temperature of a condenser of the climate control system for the duration of the insufficient supply of power.
20. The method of any one of clauses 1 to 19, wherein the condenser temperature is configured to reduce power consumed by the climate control system.
21. The method of any one of clauses 1 to 20, further comprising identifying non-essential power loads configured to receive power from a power source in communication with the climate control system; and powering off the non-essential power loads.
22. The method of any one of clauses 1 to 21, further comprising managing the operation of one or more power loads configured to receive power from a power source in communication with the climate control system.
23. The method of any one of clauses 1 to 22, wherein at least one of the one or more power sources is configured to generate power.
24. The method of any one of clauses 1 to 23, wherein at least one of the one or more power sources is configured to provide stored energy.
25. The method of any one of clauses 1 to 24 wherein the area comprises at least part of a building.
26. The method of any one of clauses 1 to 25, wherein the insufficient supply of power comprises a reduction of the supply of power received from one of the one or more power sources.
27. The method of any one of clauses 1 to 26, wherein the insufficient supply of power comprises at least one of a power-outage, a brownout, a blackout, a malfunction of at least one of the one or more power sources, an islanding condition, an off grid condition, or an extreme weather condition.
28. The method of any one of clauses 1 to 27, wherein the determining the duration comprises receiving the duration of the insufficient supply of power from a user device, wherein the user device is configured to receive input from an operator of the climate control system.
29. The method of any one of clauses 1 to 28, wherein the determining the duration comprises receiving the duration of the insufficient supply of power via a cellular internet connection.
30. The method of any one of clauses 1 to 29, further comprising receiving a weather forecast, and wherein the calculating of the climate setting is further based on the weather forecast.
31. The method of any one of clauses 1 to 30, wherein the receiving the weather forecast comprises receiving data associated with the weather forecast via a cellular internet connection.
32. The method of any one of clauses 1 to 31, wherein the receiving the weather forecast comprises receiving data associated with the weather condition parameter from a user device, wherein the user device is configured to receive a user input.
33. The method of any one of clauses 1 to 32, further comprising receiving conditions of the at least part of the area, and wherein the calculating the climate setting of the climate control system is based on the received conditions.
34. The method of any one of clauses 1 to 33 wherein one or more parameters of the received conditions comprise temperature.
35. The method of any one of clauses 1 to 34 wherein one or more parameters of the received conditions comprise humidity.
36. The method of any one of clauses 1 to 35, further comprising: calculating a required power for the area; comparing the required power with the total available power; wherein the calculating the climate setting of the climate control system is based on a determination that the required power is greater than the total available power.
37. The method of any one of clauses 1 to 36, wherein the calculating the required power is based on at least one of the duration of the insufficient supply of power or the weather condition parameter.
38. The method of any one of clauses 1 to 37, further comprising: calculating the required power for comfortable usage of one or more residents within the area; comparing the required power with the total available power; and based on a determination that the required power that is less than the total available power, enabling a user to adjust a setting of the climate control system.
39. The method of any one of clauses 1 to 38, wherein the climate control system comprises a heat pump.
40. The method of any one of clauses 1 to 39, wherein the insufficient supply of power is intermittent, and the identifying, the determining the duration, the determining the weather condition parameter, the calculating the total available power, the calculating the climate setting, and the setting steps are repeated.
41. The method of any one of clauses 1 to 40, wherein at least one of the one or more power sources comprises one or more of an energy storage device, a photovoltaic (PV) power generation system, a wind turbine, or a generator.
42. The method of any one of clauses 1 to 41, wherein the receiving the weather condition parameter comprises receiving data associated with the weather condition parameter via a cellular internet connection.
43. The method of any one of clauses 1 to 42, wherein the receiving the weather condition parameter comprises receiving data associated with the weather condition parameter from a user device, wherein the user device is configured to receive user inputted data.
44. The method of any one of clauses 1 to 43, wherein the receiving the weather condition parameter comprises receiving data associated with the weather condition parameter via an inverter of the photovoltaic (PV) power generation system.
45. The method of any one of clauses 1 to 44, further comprising receiving the conditions of the at least part of the area using one or more sensors located in the at least part of the area.
46. The method of any one of clauses 1 to 45, further comprising alerting inhabitants of the area of the insufficient supply of power.
47. The method of any one of clauses 1 to 46, further comprising alerting caregivers of inhabitants of the area of the insufficient supply of power.
48. The method of any one of clauses 1 to 47, wherein the one or more power sources comprises a photovoltaic (PV) power generation system, and wherein the calculating the total available power comprises calculating a solar power generation during the duration.
49. The method of any one of clauses 1 to 48, wherein the one or more power sources comprises a battery, and wherein the calculating the total available power comprises calculating a power associated with a deep discharge of the battery.
50. The method of any one of clauses 1 to 49, wherein the one or more power sources comprises a generator, and wherein the calculating the total available power further comprises determining a maximum amount of power that the generator is configured to supply.
51. The method of any one of clauses 1 to 50, wherein the calculating of the temperature setting of the climate control system is further based on one or more accessories connected to the climate control system.
52. The method of any one of clauses 1 to 51, wherein the one or more accessories comprise a water heating system.
53. The method of any one of clauses 1 to 52, wherein the one or more accessories comprise one or more of a thermal blanket, a bottle warmer, an air fan, or a temperature controlled medicine box.
54. The method of any one of clauses 1 to 53, wherein the temperature setting of the climate control system is configured to maintain the conditions of the at least part of the area at a minimum threshold temperature sufficient for survival.
55. The method of any one of clauses 1 to 54, wherein the climate control system is configured to heat or cool a room in the area.
56. The method of any one of clauses 1 to 55, further comprising receiving data associated with at least part of the area from a user device.
57. The method of any one of clauses 1 to 56, further comprising determining the at least part of the area based on received data.
58. The method of any one of clauses 1 to 57, wherein the determining the at least part of the area is based on data associated with power consumption of an accessory over a period of time prior to the occurrence of the insufficient supply of power.
59. The method of any one of clauses 1 to 58, wherein the calculating the temperature setting of the climate control system comprises determining a plurality of accessories that receive power during the insufficient supply of power.
60. The method of any one of clauses 1 to 59, wherein the calculating the climate setting of the climate control system comprises determining a plurality of accessories that receive power during the insufficient supply of power.
61. The method of any one of clauses 1 to 60, wherein the determining the plurality of accessories is based on data received from an operator.
62. The method of any one of clauses 1 to 61 wherein the data is received from the operator prior to the occurrence of the insufficient supply of power.
63. The method of any one of clauses 1-62 further comprising receiving data, from using one or more sensors; and analyzing a status of one or more residents based on the received data.
64. The method of any one of clauses 1 to 63, wherein the data is received from a wearable sensor.
65. The method of any one of clauses 1 to 64, wherein the status of the one or more residents comprises a level of comfort.
66. The method of any one of clauses 1 to 65, wherein the received data comprises one or more of a heart rate, a blood pressure, or a body temperature from the wearable sensor.
67. The method of any one of clauses 1 to 66, further comprising generating a user profile for each of the one or more residents based on the received data, and wherein the calculating the climate setting of the climate control system is based on the user profile for each of the one or more residents.
68. The method of any one of clauses 1 to 67, further comprising determining whether the status of the one or more residents indicates a medically abnormality; and based on a determining that the status of the one or more residents indicates the medically abnormality, sending an alert to the one or more residents.
69. The method of any one of clauses 1 to 68, further comprising: determining that power supply has been reinstated in the area; removing the temperature setting of the climate control system; and returning the climate control system to a normal operating mode.
70. The method of any one of clauses 1 to 69, further comprising repeating the identifying, the determining the duration, the determining the weather condition parameter, the calculating the total available power, the calculating the temperature setting, and the setting steps periodically until the supply of power is sufficiently reinstated.
71. The method of any one of clauses 1 to 70 wherein the repeating is performed every 10 to 100 minutes.
72. The method of any one of clauses 1 to 71 wherein the repeating is performed continuously.
73. The method of any one of clauses 1 to 72 wherein the repeating is performed after a change is made in a power consumption of at least one of the one or more accessories.
74. The method of any one of clauses 1 to 73 wherein the repeating is performed based on receiving a change in the weather forecast.
75. The method of any one of clauses 1 to 74 wherein the repeating is performed based on an update is made in the one or more power sources.
76. The method of any one of clauses 1 to 75 wherein the repeating is performed based on identifying a change in a battery storage.
77. The method of any one of clauses 1 to 76 further comprising calculating a humidity setting of the operating mode; and setting a hygrostat of the climate control system based on the humidity setting.
78. The method of any one of clauses 1 to 77 wherein the energy storage device comprises at least one of a battery, a flywheel, or a fuel cell.
79. The method of any one of clauses 1 to 78 wherein the energy storage device comprises a battery, and wherein the total available power comprises power of a deep discharge of the battery.
80. A method comprising:
   identifying an insufficient supply of power for climate control of an area;
   receiving a duration of the insufficient supply of power;
   calculating a total available power in one or more power sources, wherein each of the one or more power sources is configured to generate power or store energy;
   receiving a weather condition parameter;
   calculating a condenser temperature of a condenser of a climate control system for the duration of the insufficient supply of power; and
   maintaining, based on the condenser temperature, a temperature for at least part of the area for the duration.
81. A heat pump system comprising:
   a controller configured to set a temperature setting of the heat pump system;
   wherein the heat pump system comprises:
      a first mode of operation comprising a first temperature setting, wherein the first temperature setting is received from a user device in communication with the controller; and
      a second mode of operation configured to operate during an insufficient supply of power, wherein the second mode of operation comprises a second temperature setting, and wherein the second temperature setting is determined by the controller at a temperature based on a duration of the insufficient supply of power, a total available power from one or more power sources configured to provide power to the heat pump system, and a weather condition parameter.
82. The heat pump system of clause 81, wherein the second operating mode is a heating mode, and wherein the temperature of a condenser is between 8 and 20 degrees °C above the second temperature setting.
83. The heat pump system of any one of clauses 81 to 82 wherein the second operating mode is a cooling mode, and an evaporation temperature of the heat pump system is set to be between 6 and 17 degrees °C below the second temperature setting.
84. The heat pump system of any one of any one of clauses 81 to 83 further comprising a user device in communication with the controller, wherein the user device is configured to receive user input associated with a desired temperature setting.
85. The heat pump system of any one of clauses 81 to 84 further comprising an emergency button in communication with the controller, wherein the emergency button is configured to switch between the first mode of operation and the second mode of operation.
86. The heat pump system of any one of clauses 81-85 further comprising a damper configured to direct airflow to a specified room in an area in which the heat pump system is operating.
87. The heat pump system of any one of clauses 81 to 86 wherein the controller is configured to control the damper, and wherein at the second operation mode the damper is configured to direct airflow to a room in which a resident is present.
88. The heat pump system of any one of clauses 81-87 wherein the controller is configured to: identify the insufficient supply of power in a power source connected to the heat pump system; and switch the heat pump system to the second mode of operation.
89. A system comprising:
   a heat pump configured to transfer heat from or to an area;
   a thermostat configured to set a temperature within the area; and
   a controller configured to:
      set a temperature setting of the heat pump:
      identify an insufficient supply of power to the area;
      determine a duration of the insufficient supply of power;
      determine a weather condition parameter;
      calculate a total available power from one or more power units, wherein each of the one or more power units is configured to provide power;
      calculate, based on the duration of the insufficient supply of power, the total available power, and the weather condition parameter, the temperature setting of an operating mode of a climate control system of at least part of the climate controlled area; and
      set the thermostat to the temperature setting.

## Claims

1. A method comprising:
determining, by a computing device, a supply of power that is insufficient for climate control of an area;
determining a duration of the insufficient supply of power;
determining a weather condition parameter;
calculating total available power from one or more power sources, wherein each of the one or more power sources is configured to provide power to the area;
determining, based on the duration of the insufficient supply of power, the total available power, and the weather condition parameter, a climate setting of a climate control system of at least part of the area; and
setting the climate setting of the climate control system.

2. The method of claim 1, wherein the climate setting comprises a temperature setting.

3. The method of claim 1 or claim 2, wherein the climate setting comprises at least one of a humidity setting and an air flow setting.

4. The method of any of the preceding claims, wherein the weather condition parameter is related to power production of the one or more power sources.

5. The method of any of the preceding claims, wherein the determining the climate setting of the climate control system comprises determining a condenser temperature of a condenser of the climate control system for the duration of the insufficient supply of power.

6. The method of any of the preceding claims, wherein a first one of the one or more power sources is configured to generate power, and a second one of the one or more power sources is configured to provide stored energy.

7. The method of any of the preceding claims, wherein the determining the insufficient supply of power comprises determining a reduction of the supply of power received from one of the one or more power sources.

8. The method of any of the preceding claims, wherein determining the insufficient supply of power comprises determining at least one of a power outage, a brownout, a blackout, a malfunction of at least one of the one or more power sources, an islanding condition, an off-grid condition, or an extreme weather condition.

9. The method of any of the preceding claims, further comprising receiving a weather forecast, and wherein the determining the climate setting is further based on the weather forecast.

10. The method of any of the preceding claims, further comprising receiving conditions of the at least part of the area, and wherein the determining the climate setting of the climate control system is further based on the received conditions.

11. The method of any of the preceding claims, further comprising:
calculating required power for the area; and
comparing the required power with the total available power, wherein the determining the climate setting of the climate control system is further based on a determination that the required power is greater than the total available power.

12. The method of claim 11, wherein the calculating the required power is based on at least one of the duration of the insufficient supply of power or the weather condition parameter.

13. The method of any of the preceding claims, further comprising:
calculating required power for the area;
comparing the required power with the total available power; and
based on a determination that the required power that is less than the total available power, enabling a user to adjust a setting of the climate control system.

14. The method of any of the preceding claims, wherein at least one of the one or more power sources comprises one or more of an energy storage device, a photovoltaic, PV, power generation system, a wind turbine, or a generator.

15. The method of claim 14, wherein the determining the weather condition parameter comprises receiving data associated with the weather condition parameter via an inverter of the PV power generation system.
